# EUROPEAN PATENT APPLICATION

(11) **EP 4 842 062 A1**
(43) Date of publication of application: **18.11.2026**
(21) Application number: 25754597.0
(22) Date of filing: 10.02.2025
(51) Int. Cl.: H04W 36/08, H04W 36/00

(54) **METHOD AND DEVICE PERTAINING TO INTER-CU L1/L2 LAYER-BASED MOBILITY IN NEXT GENERATION MOBILE COMMUNICATION SYSTEM**

(30) Priority: 15.02.2024 KR 20240021631
(71) Applicant: Samsung Electronics Co., Ltd., Suwon-si, Gyeonggi-do 16677 (KR)
(72) Inventor: HWANG, June, Suwon-si, Gyeonggi-do 16677 (KR); BAE, Beomsik, Suwon-si, Gyeonggi-do 16677 (KR); OCK, Jinwoo, Suwon-si, Gyeonggi-do 16677 (KR); JIN, Seungri, Suwon-si, Gyeonggi-do 16677 (KR)
(74) Representative: Gulde & Partner
(86) International application number: PCT/KR2025/001922
(87) International publication number: WO 2025/174010

(57) **Abstract**

The disclosure relates to a 5G or 6G communication system for supporting a higher data transmission rate. The present disclosure relates to the L1/L2 triggered cell switch operation of a terminal.

## Description

### Technical Field

The disclosure relates to an operation of a terminal in a mobile communication system. Specifically, the disclosure relates to a technology for mobility of a terminal.

### Background Art

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

With the advance of mobile communication systems as described above, various services can be provided, and accordingly there is a need for ways to effectively provide these services.

### Disclosure of Invention

### Technical Problem

As a UE moves, the UE may perform a handover operation from a source cell to a target cell, and the network may instruct the UE to use a good beam in the target cell, based on a specific beam. Such an L1/L2 triggered cell switch operation is configured, from the network perspective, such that a distributed unit (DU) issues commands. Accordingly, the movement of the UE is guaranteed only between DUs connected to one CU.

An embodiment of the disclosure may provide a method and a device capable of exchanging information necessary for a UE movement between a source CU and a target CU and between DUs associated with respective CUs.

In addition, an embodiment of the disclosure may provide a method and a device for enabling a UE to perform a cell switch to a cell of an inter CU as well.

Technical subjects pursued in the disclosure are not limited to those mentioned above, and other technical subjects not mentioned herein will be clearly understood from the following description by those skilled in the art to which the disclosure pertains.

### Solution to Problem

In order to solve the above-described problems, information necessary for a UE movement may be exchanged between a source CU and a target CU and between DUs associated with respective CUs. As a result, the UE may perform a cell switch to a cell of inter CU as well.

In order to solve the above-described problems, a method performed by a central unit (CU) of a source base station in a wireless communication system according to an embodiment of the disclosure may include: transmitting a first message for requesting information for LTM configuration to a CU of at least one candidate base station associated with at least one candidate cell for inter-CU layer 1/layer 2 (L1/L2) triggered mobility (LTM); receiving configuration information regarding the at least one candidate cell from a CU of the at least one candidate base station; generating configuration information of resources for L1 measurement regarding the at least one candidate cell, based on the configuration information regarding the at least one candidate cell; and transmitting a second message including the configuration information of resources for the L1 measurement regarding the at least one candidate cell to a terminal.

According to an embodiment, the method may further include transmitting a third message including the configuration information of resources for the L1 measurement regarding the at least one candidate cell to a CU of the at least one candidate base station.

According to an embodiment, the configuration information regarding the at least one candidate cell may include at least one of configuration information of the at least one candidate cell, an indicator indicating whether the configuration information of the at least one candidate cell is a complete configuration, transmission configuration indication (TCI) state configuration information, channel state information (CSI) resource configuration information, and CSI reporting configuration information.

According to an embodiment, the configuration information of resources for the L1 measurement may include resource configuration information for channel state information (CSI) measurement of the at least one candidate cell.

In order to solve the above-described problems, a method performed by a central unit (CU) of a candidate base station in a wireless communication system according to an embodiment of the disclosure may include: receiving a first message for requesting information for LTM configuration regarding at least one candidate cell for inter-CU layer 1/layer 2 (L1/L2) triggered mobility (LTM) from a CU of a source base station; requesting configuration information regarding the at least one candidate cell from at least one distributed unit (DU) of the candidate base station associated with the at least one candidate cell; receiving the configuration information regarding the at least one candidate cell from the at least one DU of the candidate base station; and transmitting the configuration information regarding the at least one candidate cell to a CU of the source base station, wherein configuration information of resources for L1 measurement regarding the at least one candidate cell may be generated based on the configuration information regarding the at least one candidate cell.

According to an embodiment, the method may further include receiving a second message including the configuration information of resources for the L1 measurement regarding the at least one candidate cell from a CU of the source base station.

In order to solve the above-described problems, a central unit (CU) of a source base station in a wireless communication system according to an embodiment of the disclosure may include: a transceiver; and a controller connected to the transceiver and configured to transmit a first message for requesting information for LTM configuration to a CU of at least one candidate base station associated with at least one candidate cell for inter-CU layer 1/layer 2 (L1/L2) triggered mobility (LTM), receive configuration information regarding the at least one candidate cell from a CU of the at least one candidate base station; generate configuration information of resources for L1 measurement regarding the at least one candidate cell, based on the configuration information regarding the at least one candidate cell, and transmit a second message including the configuration information of resources for the L1 measurement regarding the at least one candidate cell to a terminal.

In order to solve the above-described problems, a central unit (CU) of a candidate base station in a wireless communication system according to an embodiment of the disclosure may include: a transceiver; and a controller connected to the transceiver and configured to receive a first message for requesting information for LTM configuration regarding at least one candidate cell for inter-CU layer 1/layer 2 (L1/L2) triggered mobility (LTM) from a CU of a source base station, request configuration information regarding the at least one candidate cell from at least one distributed unit (DU) of the candidate base station associated with the at least one candidate cell, receive the configuration information regarding the at least one candidate cell from the at least one DU of the candidate base station, and transmit the configuration information regarding the at least one candidate cell to a CU of the source base station, wherein configuration information of resources for L1 measurement regarding the at least one candidate cell may be generated based on the configuration information regarding the at least one candidate cell.

### Advantageous Effects of Invention

According to an embodiment of the disclosure, any UE may not experience communication interruption when moving to another cell.

In addition, an embodiment of the disclosure may provide a method and a device capable of exchanging information necessary for a UE movement between a source CU and a target CU and between DUs associated with respective CUs.

In addition, an embodiment of the disclosure may provide a method and a device for enabling a UE to perform a cell switch to a cell of an inter CU as well.

Advantageous effects obtainable from the disclosure are not limited to those mentioned above, and other effects not mentioned herein will be clearly understood from the following description by those skilled in the art to which the disclosure pertains.

### Brief Description of Drawings

FIG. 1 illustrates a structure of an LTE system according to an embodiment of the disclosure.
FIG. 2 illustrates a radio protocol structure of an LTE system according to an embodiment of the disclosure.
FIG. 3 illustrates a structure of a next-generation mobile communication system according to an embodiment of the disclosure.
FIG. 4 illustrates a radio protocol structure of a next-generation mobile communication system according to an embodiment of the disclosure.
FIG. 5 is a block diagram illustrating a structure of a UE according to an embodiment of the disclosure.
FIG. 6 is a block diagram illustrating a structure of a base station according to an embodiment of the disclosure.
FIG. 7A and FIG. 7B are diagrams illustrating an example of operations regarding inter CU MCG LTM according to an embodiment of the disclosure.
FIG. 8A and FIG. 8B are diagrams illustrating an example of a case where source configurations are changed in inter-CU MCG LTM according to an embodiment of the disclosure.
FIG. 9A and FIG. 9B are diagrams each illustrating an example of operations in case that a configuration change occurs in a target DU according to an embodiment of the disclosure.
FIG. 10A and FIG. 10B are diagrams illustrating an example of operations in case that LTM preparation is performed and then canceled according to an embodiment of the disclosure.
FIG. 11A and FIG. 11B are diagrams illustrating an example of operations in case that there are conflicting commands to perform and cancel a cell switch according to an embodiment of the disclosure.

### Mode for the Invention

Hereinafter, the operation principle of the disclosure will be described in detail with reference to the accompanying drawings. In describing the disclosure below, a detailed description of relevant known functions or configurations will be omitted when it is determined that the description may make the subject matter of the disclosure unnecessarily unclear. The terms which will be described below are terms defined in consideration of the functions in the disclosure, and may be different according to users, intentions of the users, or customs. Accordingly, the definitions thereof should be made based on the contents throughout the specification.

In describing the disclosure below, a detailed description of known functions or configurations will be omitted when it is determined that the description may make the subject matter of the disclosure unnecessarily unclear. Hereinafter, embodiments of the disclosure will be described with reference to the accompanying drawings.

Hereinafter, the operation principle of the disclosure will be described in detail with reference to the accompanying drawings. The terms which will be described below are terms defined in consideration of the functions in the disclosure. These terms may be different according to users, intentions of the users, or customs, and their definitions should be made based on the contents throughout the specification.

For the same reason, some components in the accompanying drawings are illustrated in an exaggerated, omitted, or schematic manner. In addition, the sizes of respective components do not entirely reflect their actual sizes.

The advantages and features of the disclosure and ways to achieve them will be apparent by making reference to embodiments as described below in detail in conjunction with the accompanying drawings. However, the disclosure is not limited to the embodiments set forth below, but may be implemented in various different forms. The following embodiments are provided only to completely disclose the disclosure and inform those skilled in the art of the scope of the disclosure, and the disclosure is defined only by the scope of the appended claims. Throughout the disclosure, the same or like reference numerals designate the same or like elements.

Specific terms used in the following description are provided to help understanding the disclosure, and the use of such specific terms may be changed into other forms without departing from the technical spirit of the disclosure.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

As used hereinafter, a base station is an entity that allocates resources to terminals, and may be at least one of a gNode B, an eNode B, a Node B, a base station (BS), a wireless access unit, a base station controller, and a node on a network. A terminal may include a user equipment (UE), a mobile station (MS), a cellular phone, a smartphone, a computer, or a multimedia system capable of performing communication functions. As used herein, a "downlink (DL)" refers to a radio link via which a base station transmits a signal to a terminal, and an "uplink (UL)" refers to a radio link via which a terminal transmits a signal to a base station. Furthermore, in the following description, LTE or LTE-A systems may be described by way of example, but the embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the "5G" may be the concept that covers the exiting LTE, LTE-A, and other similar services. Moreover, based on determinations by those skilled in the art, the disclosure may also be applied to other communication systems through some modifications without significantly departing from the scope of the disclosure. Herein, it will be understood that each block of the flowchart illustrations, and combinations of blocks in the flowchart illustrations, can be implemented by computer program instructions.

These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions which execute on a computer or other programmable data processing apparatus to cause a series of operational steps to be performed on the computer or other programmable data processing apparatus to produce a computer implemented process may provide steps for implementing the functions specified in the flowchart block(s).

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved. As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, subroutines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

In the following description of the disclosure, terms and names defined in 5GS and NR standards, which are the standards specified by the 3rd generation partnership project (3GPP) group among the existing communication standards, will be used for the sake of descriptive convenience. However, the disclosure is not limited by these terms and names, and may be applied in the same way to systems that conform other standards. For example, the disclosure may be applied to the 3GPP 5GS/NR (5th generation mobile communication standards).

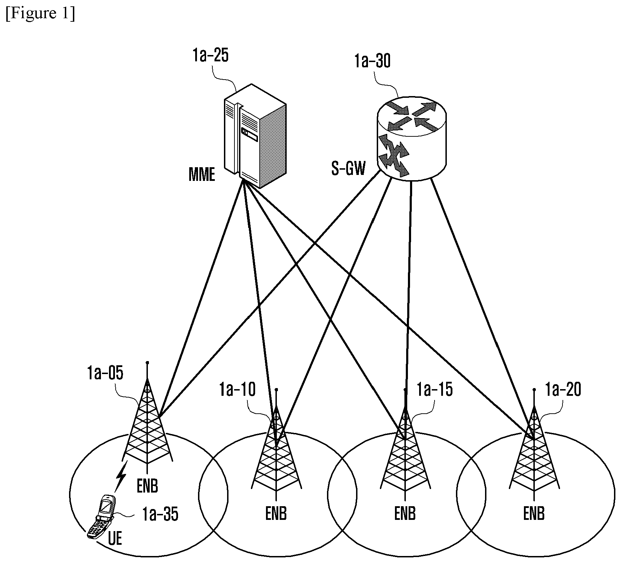

FIG. 1 illustrates a structure of an LTE system according to an embodiment of the disclosure.

Referring to FIG. 1, as illustrated therein, a radio access network of an LTE system may include next-generation base stations (evolved Node Bs, hereinafter ENBs, eNBs, Node Bs, or base stations) 1-05, 1-10, 1-15, and 1-20, a mobility management entity (MME) 1-25, and a serving gateway (S-GW) 1-30. A user equipment (hereinafter UE or terminal) 1-35 may access an external network through the ENBs 1-05 to 1-20 and the S-GW 1-30.

In FIG. 1, the ENBs 1-05 to 1-20 may each correspond to a conventional Node B of the UMTS system. The ENBs 1-05 to 1-20 are connected to the UE 1-35 through a radio channel, and perform more complicated roles than the conventional Node B. In the LTE system, all user traffic including real-time services, such as voice over IP (VoIP) via the Internet protocol, may be serviced through a shared channel. Thus, a device that collects state information, such as buffer states, available transmit power states, and channel states of UEs, and performs scheduling accordingly is required, and the ENBs 1-05 to 1-20 may serve as the device. In general, one ENB 1-05 to 1-20 may control multiple cells. For example, in order to implement a transfer rate of 100Mbps, the LTE system may use orthogonal frequency division multiplexing (OFDM) as a radio access technology in a bandwidth of, for example, 20MHz. Furthermore, the LTE system may employ an adaptive modulation & coding (AMC) scheme for determining a modulation scheme and a channel coding rate according to a channel state of a UE. The S-GW 1-30 is a device that provides a data bearer, and may generate or remove a data bearer under the control of the MME 1-25. The MME 1-25 is a device responsible for various control functions as well as a mobility management function for a UE 1-30, and may be connected to multiple base stations 1-05 to 1-20.

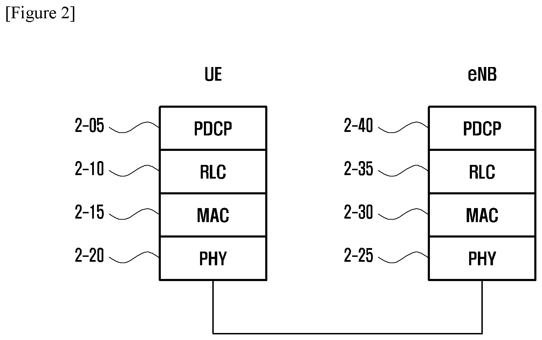

FIG. 2 illustrates a radio protocol structure of an LTE system according to an embodiment of the disclosure.

Referring to FIG. 2, a radio protocol of an LTE system may include a packet data convergence protocol (PDCP) 2-05 or 2-40, a radio link control (RLC) 2-10 or 2-35, and a medium access control (MAC) 2-15 or 2-30 on each of UE and ENB sides. The PDCP 2-05 or 2-40 may serve to perform operations such as IP header compression/reconstruction. The main functions of the PDCP 2-05 or 2-40 may be summarized as follows.
- Header compression and decompression: robust header compression: (ROHC) only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The radio link control (RLC) 2-10 or 2-35 may reconfigure a PDCP protocol data unit (PDU) into appropriate sizes to perform an ARQ operation. The main functions of the RLC 2-10 or 2-35 may be summarized as follows.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC 2-15 or 2-30 may be connected to several RLC layer devices configured in a single UE, and may perform operations of multiplexing RLC PDUs into an MAC PDU and demultiplexing RLC PDUs from an MAC PDU. The main functions of the MAC 2-15 or 2-30 are summarized as follows.
- Mapping between logical channels and transport channels
- Multiplexing/demultiplexing of MAC SDUs belonging to one or different logical channels into/from transport blocks (TB) delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical layer 2-20 or 2-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

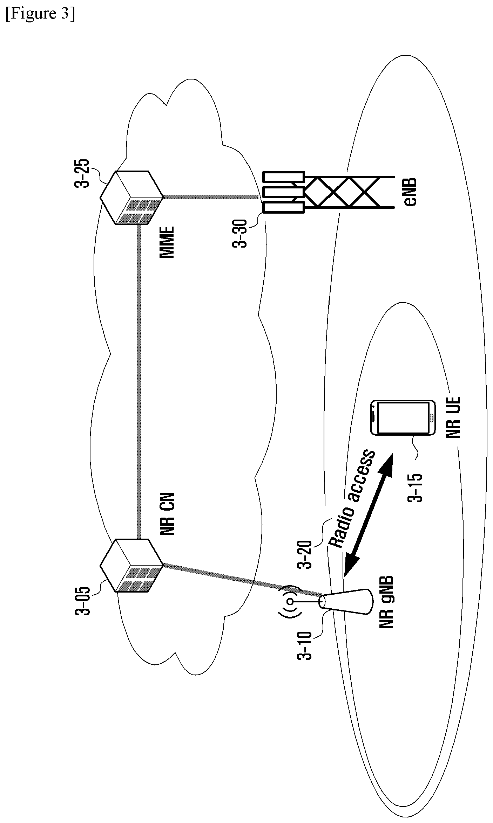

FIG. 3 illustrates a structure of a next-generation mobile communication system according to an embodiment of the disclosure.

Referring to FIG. 3, a radio access network of a next-generation mobile communication system (hereinafter NR, or 5G) may include a new radio Node B (hereinafter NR gNB. gNB, or NR base station) 3-10, and a new radio core network (NR CN) 3-05. A new radio user equipment (NR UE or terminal) 3-15 may access an external network via the NR gNB 3-10 and the NR CN 3-05.

In FIG. 3, the NR gNB 3-10 may correspond to an evolved Node B (eNB) of the conventional LTE system. The NR gNB 3-10 may be connected to the NR UE 3-15 through a radio channel and may provide outstanding services as compared to a conventional Node B. In the next-generation mobile communication system, all user traffic may be serviced through a shared channel. Thus, a device that collects state information, such as buffer states, available transmit power states, and channel states of UEs 3-15, and performs scheduling accordingly is required, and the NR gNB 3-10 may serve as the device. In general, one NR gNB 3-10 may control multiple cells. In order to implement ultrahigh-speed data transfer beyond the conventional LTE, the next-generation mobile communication system may provide a wider bandwidth than the normal maximum bandwidth. in addition, the next-generation mobile communication system may employ an orthogonal frequency division multiplexing (OFDM) scheme as a radio access technology, and may additionally integrate a beamforming technology therewith. Furthermore, the next-generation mobile communication system may employ an adaptive modulation & coding (hereinafter referred to as AMC) scheme for determining a modulation scheme and a channel coding rate according to a channel state of a UE. The NR CN 3-05 may perform functions such as mobility support, bearer configuration, and QoS configuration. The NR CN 3-05 is a device responsible for various control functions as well as a mobility management function for a UE, and may be connected to multiple base stations 3-10. In addition, the next-generation mobile communication system may interwork with the LTE system, and the NR CN 3-05 may be connected to an MME 3-25 via a network interface. The MME 3-25 may be connected to an eNB 3-30 that is an LTE base station.

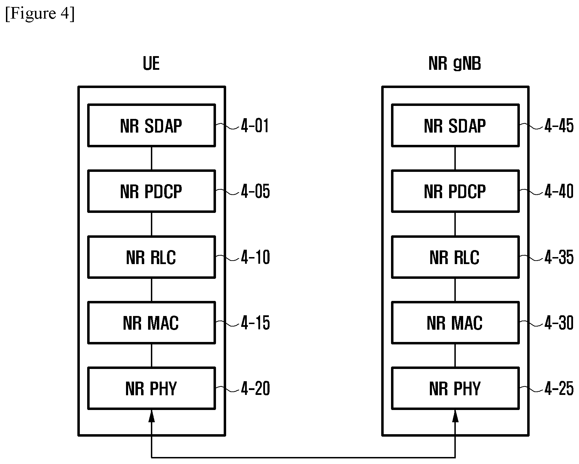

FIG. 4 illustrates a radio protocol structure of a next-generation mobile communication system according to an embodiment of the disclosure.

Referring to FIG. 4, a radio protocol of a next-generation mobile communication system may include an NR service data adaptation protocol (SDAP) 4-01 or 4-45, an NR PDCP 4-05 or 4-40, an NR RLC 4-10 or 4-35, an NR MAC 4-15 or 4-30, and an NR PHY 4-20 or 4-25 on each of UE and NR gNB sides.

The main functions of the NR SDAP 4-01 or 4-45 may include some of functions below.
- Transfer of user plane data
- Mapping between a QoS flow and a DRB for both the UL and the DL
- Marking QoS flow ID in both DL and UL packets
- Reflective QoS flow to DRB mapping for UL SDAP PDUs

With regard to the SDAP layer device, whether to use the header of the SDAP layer device or whether to use functions of the SDAP layer device may be configured for the UE through an RRC message according to PDCP layer devices or according to bearers or according to logical channels. If an SDAP header is configured, the non-access stratum (NAS) quality of service (QoS) reflection configuration 1-bit indicator (NAS reflective QoS) of the SDAP header and the access stratum (AS) QoS reflection configuration 1-bit indicator (AS reflective QoS) may indicate, to the UE, that the UE can update or reconfigure mapping information regarding the QoS flow and data bearer of the uplink and downlink. The SDAP header may include QoS flow ID information indicating QoS. QoS information may be used as data processing priority, scheduling information, etc. to support desired services.

The main functions of the NR PDCP 4-05 or 4-40 may include some of functions below.
- Header compression and decompression: robust header compression: (ROHC) only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Among the above-mentioned functions, the reordering of the NR PDCP device may refer to a function of reordering PDCP PDU received from a lower layer in an order based on PDCP sequence numbers (SNs). The reordering of the NR PDCP device may include a function of transferring data to an upper layer according to a rearranged order, may include a function of directly transferring data without considering order, may include a function of rearranging order to record lost PDCP PDUs, may include a function of reporting the state of lost PDCP PDUs to a transmission side, and may include a function of requesting retransmission of lost PDCP PDUs.

The main functions of the NR RLC 4-10 or 4-35 may include some of functions below.
- Transfer of upper layer PDUs
- In-sequence delivery of upper layer PDUs
- Out-of-sequence delivery of upper layer PDUs
- Error correction through ARQ
- Concatenation, segmentation, and reassembly of RLC SDUs
- Re-segmentation of RLC data PDUs
- Reordering of RLC data PDUs
- Duplicate detection
- Protocol error detection
- RLC SDU discard
- RLC re-establishment

Among the above-described functions, the in-sequence delivery of the NR RLC device may refer to a function of, if there is a lost RLC PDU, delivering only RLC SDUs before the lost RLC PDU to the upper layer in sequence. The in-sequence delivery function of the NR RLC device may include a function of, If multiple RLC SDUs into which one original RLC SDU is divided are received, reassembling the RLC SDUs and delivering the reassembled RLC SDUs..

The in-sequence delivery function of the NR RLC device may include a function of rearranging received RLC PDUs with reference to RLC sequence numbers (SNs) or PDCP sequence numbers (SNs), may include a function of rearranging order to record lost RLC PDUs, may include a function of reporting the state of lost RLC PDUs to a transmission side, and may include a function of requesting retransmission of lost RLC PDUs.

The in-sequence delivery function of the NR RLC device may include a function of, if there is a lost RLC SDU, delivering only the RLC SDUs before the lost RLC SDU to the higher layer in sequence.

The in-sequence delivery function of the NR RLC device may include a function of, if a predetermined timer has expired even when there is a lost RLC SDU, delivering all RLC SDUs received before the timer started to the higher layer in sequence .

The in-sequence delivery function of the NR RLC device may include a function of, if a predetermined timer has expired even when there is a lost RLC SDU, delivering all RLC SDUs received so far to the higher layer in sequence.

The NR RLC device may process RLC PDUs in a reception sequence, regardless of the sequence of sequence numbers (out-of-sequence delivery). and then deliver the processed RLC PDUs to the NR PDCP device.

If receiving segments, the NR RLC device may receive segments stored in a buffer or to be received in the future, reconfigure the segments into one whole RLC PDU, process the RLC PDU, and then deliver the processed RLC PDU to the NR PDCP device.

The NR RLC layer may include no concatenation function, which may be performed in the NR MAC layer or replaced with a multiplexing function of the NR MAC layer.

Among the above-mentioned functions, the out-of-sequence delivery of the NR RLC device may refer to a function of instantaneously delivering RLC SDUs received from the lower layer to the higher layer, regardless of sequence. The out-of-sequence delivery function of the NR RLC device may include a function of, if multiple RLC SDUs into which one original RLC SDU is divided are received, reassembling the RLC SDUs and delivering the reassembled RLC SDU. The out-of-sequence delivery function of the NR RLC device may include a function of storing RLC SNs or PDCP SNs of received RLC PDUs and arranging the sequence thereof to record lost RLC PDUs.

The NR MAC 4-15 or 4-30 may be connected to multiple NR RLC layer devices configured in a single UE, and the main functions of the NR MAC may include some of functions below.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 4-20 or 4-25 may perform operations of channel-coding and modulating upper layer data, thereby obtaining OFDM symbols, and delivering the same through a radio channel, or demodulating OFDM symbols received through the radio channel, channel-decoding the same, and delivering the same to the upper layer.

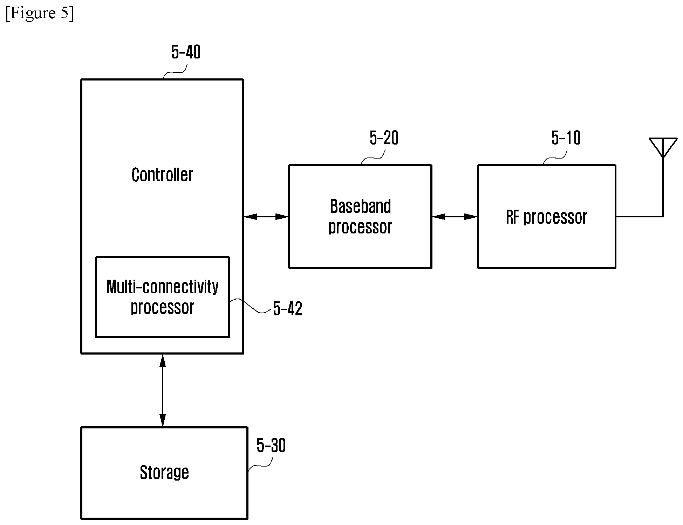

FIG. 5 is a block diagram illustrating a structure of a UE according to an embodiment of the disclosure.

Referring to FIG. 5, the UE may include a radio frequency (RF) processor 5-10, a baseband processor 5-20, a storage 5-30, a controller 5-40, and the like.

The RF processor 5-10 may perform functions for transmitting/receiving signals through a radio channel, such as signal band conversion and amplification. The RF processor 5-10 may up-convert a baseband signal provided from the baseband processor 5-20 to an RF band signal, may transmit the same through an antenna, and may down-convert an RF band signal received through the antenna to a baseband signal. For example, the RF processor 5-10 may include a transmission filter, a reception filter, an amplifier, a mixer, an oscillator, a digital-to-analog converter (DAC), an analog-to-digital converter (ADC), and the like. Although only one antenna is illustrated in FIG. 5, the UE may include multiple antennas. In addition, the RF processor 5-10 may include multiple RF chains. Furthermore, the RF processor 5-10 may perform beamforming. For the beamforming, the RF processor 5-10 may adjust the phase and magnitude of signals transmitted/received through multiple antennas or antenna elements, respectively. In addition, the RF processor may perform MIMO, and may receive multiple layers when performing an MIMO operation.

The baseband processor 5-20 may perform functions of conversion between baseband signals and bitstrings according to the physical layer specifications of the system. For example, during data transmission, the baseband processor 5-20 may encode and modulate a transmitted bitstring to generate complex symbols. In addition, during data reception, the baseband processor 5-20 may demodulate and decode a baseband signal provided from the RF processor 5-10 to restore a received bitstring. For example, when following the orthogonal frequency division multiplexing (OFDM) scheme, during data transmission, the baseband processor 5-20 may encode and modulate a transmitted bitstring to generate complex symbols, may map the complex symbols to subcarriers, and may configure OFDM symbols through inverse fast Fourier transform (IFFT) operation and cyclic prefix (CP) insertion. In addition, during data reception, the baseband processor 5-20 may split a baseband signal provided from the RF processor 5-10 at the OFDM symbol level, may restore signals mapped to subcarriers through a fast Fourier transform (FFT) operation, and may restore a received bitstring through demodulation and decoding.

The baseband processor 5-20 and the RF processor 5-10 may transmit and receive signals as described above. Therefore, the baseband processor 5-20 and the RF processor 5-10 may be referred to as a transmitter, a receiver, a transceiver, or a communication unit. Furthermore, at least one of the baseband processor 5-20 and the RF processor 5-10 may include multiple communication modules to support multiple different radio access technologies. In addition, at least one of the baseband processor 5-20 and the RF processor 5-10 may include different communication modules to process signals in different frequency bands. For example, the different radio access technologies may include a wireless LAN (e.g., IEEE 802.11), a cellular network (e.g., LTE), etc. In addition, the different frequency bands may include a super high frequency (SHF) (e.g., 2NRHz) band and a millimeter wave (mmWave) (e.g., 60GHz) band.

The storage 5-30 may store basic programs, application programs, and data, such as configuration information, for the operation of the UE. Particularly, the storage 5-30 may store information regarding a second access node configured to perform wireless communication by using a second radio access technology. In addition, the storage 5-30 may provide the stored data at the request of the controller 5-40.

The controller 5-40 controls the overall operation of the UE. For example, the controller 5-40 may transmit/receive signals through the baseband processor 5-20 and the RF processor 5-10. In addition, the controller 5-40 records data in the storage 5-30 and reads the data from the storage 5-30. To this end, the controller 5-40 may include at least one processor. For example, the controller 5-40 may include a communication processor (CP) configured to perform control for communication, and an application processor (AP) configured to control upper layers such as application programs.

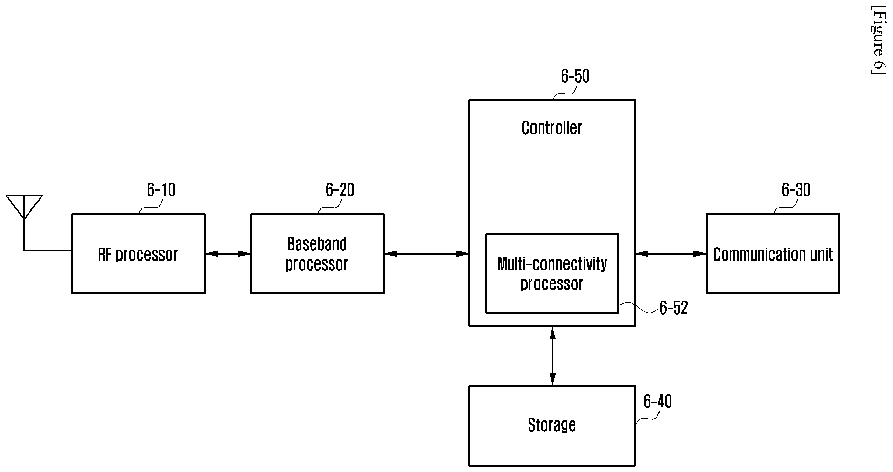

FIG. 6 is a block diagram illustrating a structure of a base station according to an embodiment of the disclosure.

Referring to FIG. 6, the base station may include an RF processor 6-10, a baseband processor 6-20, a backhaul communication unit 6-30, a storage 6-40, a controller 6-50, and the like.

The RF processor 6-10 may perform functions for transmitting/receiving signals through a radio channel, such as signal band conversion and amplification. The RF processor 6-10 may up-convert a baseband signal provided from the baseband processor 6-20 to an RF band signal, may transmit the same through an antenna, and may down-convert an RF band signal received through the antenna to a baseband signal. For example, the RF processor 6-10 may include a transmission filter, a reception filter, an amplifier, a mixer, an oscillator, a DAC, and an ADC. Although only one antenna is illustrated in FIG. 6, the base station may include multiple antennas. In addition, the RF processor 6-10 may include multiple RF chains. Furthermore, the RF processor 6-10 may perform beamforming. For the beamforming, the RF processor 6-10 may adjust the phase and magnitude of signals transmitted/received through multiple antennas or antenna elements, respectively. The RF processor may transmit one or more layers to perform a downward MIMO operation.

The baseband processor 6-20 may perform functions of conversion between baseband signals and bitstrings according to the physical layer specifications of first radio access technology. For example, during data transmission, the baseband processor 6-20 may encode and modulate a transmitted bitstring to generate complex symbols. In addition, during data reception, the baseband processor 6-20 may demodulate and decode a baseband signal provided from the RF processor 6-10 to restore a received bitstring. For example, when following the OFDM scheme, during data transmission, the baseband processor 6-20 may encode and modulate a transmitted bitstring to generate complex symbols, may map the complex symbols to subcarriers, and may configure OFDM symbols through IFFT operation and CP insertion. In addition, during data reception, the baseband processor 6-20 may split a baseband signal provided from the RF processor 6-10 at the OFDM symbol level, may restore signals mapped to subcarriers through FFT operation, and may restore a received bitstring through demodulation and decoding. The baseband processor 6-20 and the RF processor 6-10 may transmit and receive signals as described above. Therefore, the baseband processor 6-20 and the RF processor 6-10 may be referred to as a transmitter, a receiver, a transceiver, or a communication unit.

The backhaul communication unit 6-30 provides an interface for communicating with other nodes in the network. The backhaul communication unit 6-30 converts bitstrings transmitted from the base station to other nodes, for example, an auxiliary base station, a core network, etc., into physical signals, and converts physical signals received from the other nodes into bitstrings.

The storage 6-40 may store basic programs, application programs, and data, such as configuration information, for the operation of the base station. Particularly, the storage 6-40 may store information regarding a bearer allocated to a connected UE, a measurement result reported from the connected UE, and the like. In addition, the storage 6-40 may store information serving as criteria to determine whether to provide multi-connectivity to UEs or to suspend same. In addition, the storage 6-40 may provide the stored data at the request of the controller 6-50.

The controller 6-50 controls the overall operation of the base station. For example, the controller 6-50 transmits/receives signals through the baseband processor 6-20 and the RF processor 6-10 or through the backhaul communication unit 6-30. In addition, the controller 6-50 records data in the storage 6-40 and reads the data from the storage 6-40. To this end, the controller 6-50 may include at least one processor.

Hereinafter, the following abbreviations may be used in the specification.
LTM: L1/L2 triggered mobility
CU: central unit
DU: distributed unit
MCG: master cell group
MN: master node

This specification mainly proposes operations needed to prepare for an inter-CU cell and performing LTM when a UE performs LTM. In particular, the disclosure proposes operations for LTM in the MCG (that is, primary cell (pcell) mobility). In particular, legacy LTM only assumes intra-CU operations, and this lacks inter-node signals.

As a basic prerequisite, the LTM execution command is issued by the DU, and the DU (candidate DU) that is ready for LTM should accordingly have at least one of the following as information regarding all candidate cells.
- LTM candidate ID
- Association information (mapping) between the LTM candidate ID and the corresponding cell ID
- Beam information to be used in each candidate (transmission configuration indication (TCI) state)
   ■ In this case, "use" may have the following meanings: a beam interworking with a random access channel (RACH) occasion when performing downlink (DL) and/or uplink (UL) synchronization and/or random access (RACH), and/or a beam to be used for first UL data transmission. If necessary, an indicator may be accompanied according to each case to perform a cell switch.
- RACH preamble index
- SSB index: the index of an SSB used to determine a RACH occasion in each candidate cell, and may indicate an occasion for transmitting a RACH preamble of contention-free random access (CFRA).

The above information is to be displayed when a cell switch command medium access control (MAC) control element (CE) is indicated with regard to a candidate cell regarding which LTM has been determined.

As a preparation step before the cell switch, each candidate cell may be transmitting channel state information (CSI) for LTM, and the corresponding reference signal (RS) information for the CSI should also be owned by each DU. Before indicating the LTM cell switch, the source DU may transfer CSI information regarding specific candidate cells to the UE, and the UE may measure and report the corresponding CSI RS. Upon receiving the measurement result report, the source DU may determine whether it is necessary to move to the corresponding cell, or which beam is to be used. To this end, each DU may need at least one of the following pieces of information for its concerned cell.
- CSI resource configurations of respective candidate cells (needed when the source DU transfers the L1 measurement configuration to the UE), cell-specific individual resource configurations and/or configuration IDs, CSI resource configurations for LTM, etc.
- CSI report configurations considering CSI resources of respective candidate cells
   ■ This has the following purpose: in case that the candidate DU generates above information and transfers the same to the CU, this information may be used as a CSI report configuration in a target cell configuration (RRCReconfiguration) of the concerned cell (i.e., target cell) composed by the CU.
   ■ That is, in case that the UE moves from another cell to this cell (concerned cell), the same may be used as a CSI report configuration assuming that the cell is a serving cell. The same may be intended to be included in the target cell config (configuration) without providing a separate L1 configuration for subsequent LTM.
- RACH configuration and lower layer configuration information to be used in the concerned cell
   ■ This information may be transferred to the CU by the candidate DU, may be composed as configurations necessary to perform the RACH in the target cell configuration of the concerned cell and lower layer configurations to be applied when moving to the cell, and/or reference configurations including them, and may be transferred to the UE later.
   ■ In particular, some of RACH configurations may be used to include the RACH preamble index, mask, and occasion determination information in the cell switch command MAC CE described above.

The inter-CU signaling will be described based on the above information.

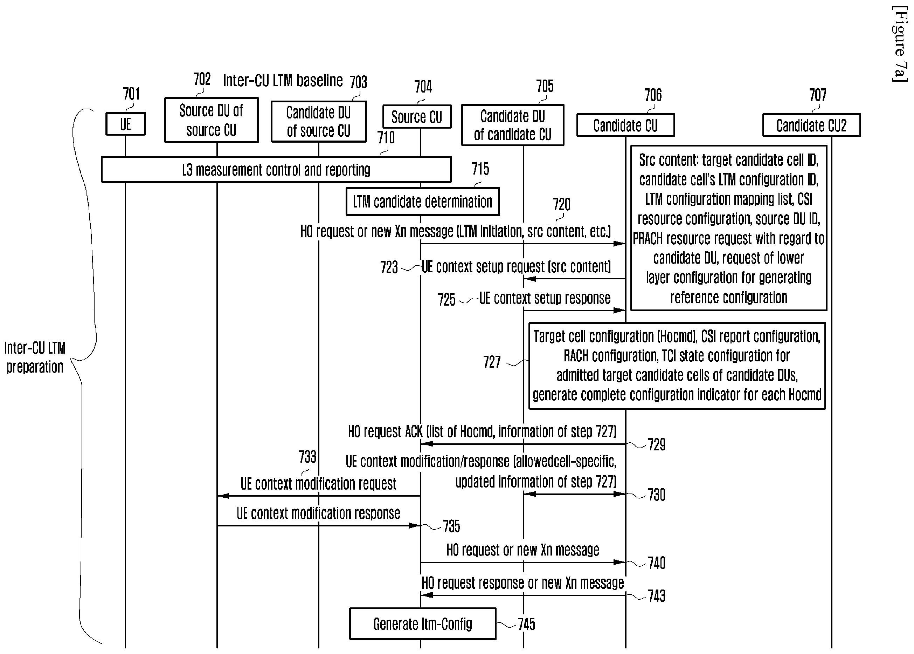

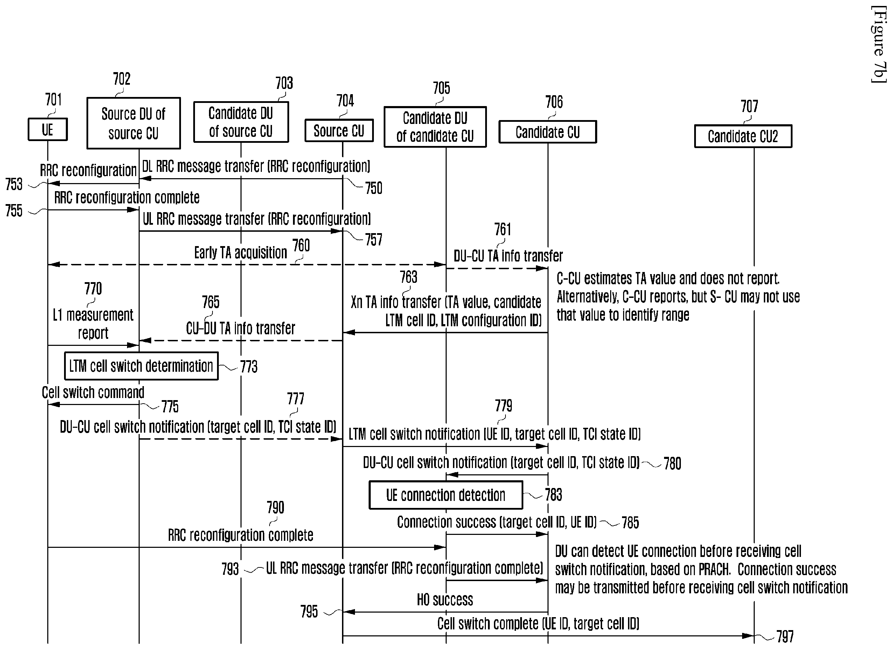

FIG. 7A and FIG. 7B are diagrams for describing an example of operations regarding inter-CU MCG LTM according to an embodiment of the disclosure.

Operations in respective steps in FIG. 7A and FIG. 7B will now be described.

In step 710, the UE 701 is connected to the source CU 704, and is also connected to the source DU 702 that operates a serving cell of the source CU 704. After receiving the L3 measurement configuration from the source CU 704, the UE 701 may transfer the corresponding measurement result report to the source CU 704 through the source DU 702.

In step 715, the source CU 704 may determine a candidate cell of LTM, based on the measurement result from the UE 701, and may determine LTM preparation.

In step 720, the source CU 704 may request the candidate CU 706 that operates the determined candidate cell to allocate resources to the UE 701 through a request (handover request) message or a separate message (for example, a new Xn message). The message may include at least one of the following pieces of information.
A. Indicator for performing LTM
   i. An indicator may be additionally included to indicate whether the request is for the first preparation, e.g., initiation or modification after the first.
B. UE ID
C. The ID of the source CU 704 and/or the ID of source DU 702, and/or the transport network layer (TNL) address (e.g., IP address) of the source CU 704
D. The ID (physical cell identity (PCI) or NR cell global identity (CGI) with NR absolute radio frequency channel number (ARFCN)) of the candidate cell of request
E. The LTM configuration ID of this candidate cell (if accepted, the source DU 702 may use the LTM config ID during a cell switch to the target cell).
F. The LTM configuration ID mapping list: when transferred to the candidate DU 705, this information indicates LTM configurations that the candidate DU 705 can currently operate and their cell mapping relationship
   i. Opt 1. The candidate cell list may be a list of candidate cells operated by all candidate CUs 706 and 707 for the corresponding UE 701, or
   ii. Opt 2. The list may include only candidate cells operated by the source CU 704 that transmits the HO request message.
G. Configuration information of CSI resources transmitted by all candidate cells currently configured
H. Indicator for requesting PRACH resource information with regard to the target candidate cell
I. Indicator for requesting a lower layer configuration with regard to the target candidate cell

Obviously, the message may include not only the above information, but also pieces of information that have been conventionally used in the HO request message. Information included in the HO request message may refer to Table 1 below.

**[Table 1]**

| Source NG-RAN node UE XnAP ID reference | NG-RAN node UE XnAP ID 9.2.3.16 | Allocated at the source NG-RAN node |
|---|---|---|
| Cause | 9.2.3.2 | |
| Target Cell Global ID | 9.2.3.25 | Includes either an E-UTRA CGI or an NR CGI |
| GUAMI | 9.2.3.24 | |

| **UE Context Information** | | |
|---|---|---|
| >NG-C UE associated Signalling reference | AMF UE NGAP ID 9.2.3.26 | Allocated at the AMF on the source NG-C connection. |
| >Signalling TNL association address at source NG-C side | CP Transport Layer Information 9.2.3.31 | This IE indicates the AMF's IP address of the SCTP association used at the source NG-C interface instance. NOTE: If no UE TNLA binding exists at the source NG-RAN node, the source NG-RAN node indicates the TNL association address it would have selected if it would have had to create a UE TNLA binding. |
| >UE Security Capabilities | 9.2.3.49 | |
| >AS Security Information | 9.2.3.50 | |
| >Index to RAT/Frequency Selection Priority | 9.2.3.23 | |
| >UE Aggregate Maximum Bit Rate | 9.2.3.17 | |
| >PDU Session Resources To Be Setup List | 9.2.1.1 | Similar to NG-C signalling, containing UL tunnel information per PDU Session Resource; and in addition, the source side QoS flow ⇔ DRB mapping |
| >RRC Context | OCTET STRING | Either includes the *HandoverPreparationInformation* message as defined in subclause 10.2.2. of TS 36.331 [14], or the *HandoverPreparationInformation-NB* message as defined in subclause 10.6.2 of TS 36.331 [14], if the target NG-RAN node is an ng-eNB,or the *HandoverPreparationInformation* message as defined in subclause 11.2.2 of TS 38.331 [10], if the target NG-RAN node is a gNB. |
| >Location Reporting Information | 9.2.3.47 | Includes the necessary parameters for location reporting. |
| >Mobility Restriction List | 9.2.3.53 | |
| >5GC Mobility Restriction List Container | 9.2.3.100 | |
| >NR UE Sidelink Aggregate Maximum Bit Rate | 9.2.3.107 | This IE applies only if the UE is authorized for NR V2X services. |
| >LTE UE Sidelink Aggregate Maximum Bit Rate | 9.2.3.108 | This IE applies only if the UE is authorized for LTE V2X services. |
| >Management Based MDT PLMN List | MDT PLMN List 9.2.3.133 | |
| >UE Radio Capability ID | 9.2.3.138 | |
| >MBS Session Information List | 9.2.1.36 | |
| >5G ProSe UE PC5 Aggregate Maximum Bit Rate | NR UE Sidelink Aggregate Maximum Bit Rate 9.2.3.107 | This IE applies only if the UE is authorized for 5G ProSe services. |
| >UE Slice Maximum Bit Rate List | 9.2.3.167 | |
| >NR A2X UE PC5 Aggregate Maximum Bit Rate | NR UE Sidelink Aggregate Maximum Bit Rate 9.2.3.107 | This IE applies only if the UE is authorized for NR A2X services. |
| >LTE A2X UE PC5 Aggregate Maximum Bit Rate | LTE UE Sidelink Aggregate Maximum Bit Rate 9.2.3.108 | This IE applies only if the UE is authorized for LTE A2X services. |
| Trace Activation | 9.2.3.55 | |
| Masked IMEISV | 9.2.3.32 | |
| UE History Information | 9.2.3.64 | |

| **UE Context Reference at the S-NG-RAN node** | | |
|---|---|---|
| >Global NG-RAN Node ID | 9.2.2.3 | |
| >S-NG-RAN node UE XnAP ID | NG-RAN node UE XnAP ID 9.2.3.16 | |

In step 723, after receiving a request from the source CU 704, the candidate CU 706 may transfer at least one of the following pieces of information to the candidate DU 705 corresponding to the candidate cell for which the request has been received. This information may be transmitted while being included in a UE context setup request message of the F1 interface or a new F1 message.
A. Information received by the candidate CU 706 from the source CU 704
   i. Target candidate cell ID: an ID, PCI, or NR CGI indicating a candidate target cell.
   ii. Configuration ID during use in the LTM mapped to the corresponding candidate cell, i.e., the LTM configuration ID of the candidate cell.
   iii. LTM configuration ID mapping list: information of the LTM candidate ID and the cell ID that have been allocated until now
      1. Opt 1. This information may include candidate cells operated by all candidate CUs 706 and 707.
      2. Opt 2. The same may include only candidate cells operated by the source CU 704. In this case, the candidate CU 706 may separately transfer mapping information between the LTM configuration ID and the candidate cell in addition to information of the candidate cells operated by the candidate CU 706.
   iv. CSI resource configuration: CSI resource configuration information transmitted by candidate cells that have been operated until now may be transferred. In this case, information may be distinguished according to opt 1 and opt 2 and then transferred.
   v. An indicator for requesting PRACH resource information with regard to a target candidate cell
   vi. An indicator for requesting a lower layer configuration with regard to a target candidate cell
B. Additionally, the candidate CU 706 may transfer information held thereby. In the case of op. 2, information regarding LTM candidate cells operated by the candidate CU 706 may be transferred.
   i. Target candidate cell ID: an ID, PCI, or NR CGI indicating a candidate target cell.
   ii. Configuration ID during use in the LTM mapped to the corresponding candidate cell, i.e., the LTM configuration ID of the candidate cell.
   iii. LTM configuration ID mapping list: information of the LTM candidate ID and the cell ID that have been allocated until now
      1. Opt 1. This information may include candidate cells operated by all candidate CUs 706 and 707.
      2. Opt 2. The same may include only candidate cells operated by the source CU 704. In this case, the candidate CU 706 may separately transfer mapping information between the LTM configuration ID and the candidate cell to the candidate DU 705 in addition to information of the candidate cells operated by the candidate CU 706.
   iv. CSI resource configuration: CSI resource configuration information transmitted by candidate cells that have been operated until now may be transferred. In this case, information may be distinguished according to opt 1 and opt 2 and then transferred.
   v. An indicator for requesting PRACH resource information with regard to a target candidate cell
   vi. An indicator for requesting a lower layer configuration with regard to a target candidate cell

After receiving above information, the candidate DU 705 may accept or reject the LTM resource request regarding the corresponding UE 701. When accepting, the candidate DU 705 may notify the candidate CU 706 of the acceptance result through a UE context setup response message or an F1 message corresponding thereto in step 725. The message may additionally include the following pieces of information.
A. Generated lower layer RRC configuration
   i. This information may be a cellGroupConfiguration in RRC.
   ii. If the lower layer configuration is a complete configuration, an indicator indicating the complete configuration may also be included.
B. SSB time/frequency information transmitted in the corresponding candidate cell may be transferred.
   i. This information is collected by the candidate CU 706 from each DU 705 and candidate cells and transmitted to the UE 701, and may be referred to as an element of the CSI resource referred to in the CSI report configuration of the LTM.
   ii. The same may also be referred to for DL or UL or joint TCI state information.
C. DL or UL or joint TCI state configuration information currently operated in the corresponding candidate cell: the configuration information may be configured for the UE 701 by the CU by using RRC, and a specific TCI state may be activated/deactivated through a candidate cell TCI state activation/deactivation MAC CE. Through the activated TCI state, the UE 701 may perform DL synchronization before a cell switch command. In addition, in a cell switch command, one DL or joint and/or UL TCI state among the TCI states may be signaled, thereby instructing the UE 701 to activate the indicated TCI state of the corresponding candidate cell and instantly use the same during a cell switch.
D. RACH configuration information: RACH configuration information used in the corresponding candidate cell
E. CSI report configuration information: with reference to the CSI resource configurations of all candidate cells given from the candidate CU 706, the candidate DU 705 may generate a CSI report configuration. This information may include an instruction to measure which CSI resource of which cell, and a report configuration such as periodic, semi-persistent, or persistent. Thereafter, the same may be included in the target cell configuration and used to automatically perform L1 measurement and reporting for LTM, without a separate configuration, when the UE 701 moves to this cell.

After receiving above information, the candidate CU 706 may compose (generate) a HO command (Hocmd) message (e.g., RRCReconfiguration) regarding the corresponding candidate cell in step 727.

The candidate CU 706 may transfer this information to the source CU 704 in step 729. The HO command message may be included in an HO request acknowledgement (ACK) message or a new/or existing message of XN corresponding thereto.
A. Opt 1. In case that the candidate CU 706 receives an HO request regarding one candidate target cell from the source CU 704, the candidate CU 706 may transfer information regarding the corresponding one target cell to the source CU 704.
B. Opt 2. Even if the candidate CU 706 receives an HO request regarding one candidate target cell from the source CU 704, if there is a new message regarding other candidate cells for which admission has been allowed with regard to LTM candidate cells regarding the same UE 701 at a timepoint at which the candidate CU 706 sends the HO request ACK message, the HO request ACK message may include information regarding all newly allowed candidate cells and transferred to the UE 701 in a batch (through the source CU 704).
C. Opt 3. In case that the candidate CU 706 receives an LTM preparation request from the source CU 704 with regard to multiple candidate target cells operated by the corresponding CU (candidate CU) 706, the candidate CU 706 may collect information regarding all other candidate cells for which admission has been allowed, and may transfer the HO request ACK message, including the collected information, to the source CU 704.
D. With respect to each admitted candidate cell, this message may include at least one of the following pieces of information. The candidate CU 706 may distinguish a PCI for distinguishing each candidate cell or an NR CGI with ARFCN or an LTM configuration ID of each candidate cell assigned by the source CU 706, and may include the following information therein.
   i. Target cell configuration (e.g., RRCReconfiguration)
   ii. An indicator indicating whether the target cell configuration is a complete configuration or no
   iii. TCI state configuration (DL or joint and/or UL TCI state)
   iv. CSI report configuration
   v. CSI resource configuration information transmitted in each cell
   vi. RACH configuration
E. The following information may be included with regard to each of the candidate CUs 706 and 707, not with regard to each cell.
   i. LTM reference configuration for this candidate CU's candidate cells
      1. An ID (e.g., gNB ID or an integer ID allocated by the source CU 704 to the candidate CU) for distinguishing the candidate CUs 706 and 707 may be transferred to the UE 701 in association with each candidate cell configuration information
      2. Thereafter, in case that the UE 701 receives a cell switch command to a specific cell, the reference configuration associated with the specific cell may be applied
   ii. LTM CSI-resource configuration information
      1. The LTM CSI-Resource configuration may include an LTM CSI resource config determined by the DU 705 of each candidate cell with regard to each admitted candidate cell in the candidate CU 706.
         A. In case that the one candidate cell is considered as a source cell, CSI resources transmitted in all or some specific candidate cells, excluding that cell, may be indicated. A bit list obtained by mapping the LTM config ID of each cell and the SSB index or CSI-RS resource ID considered as CSI in that cell may be included in association with the LTM config ID of the source cell.

Before or immediately after the candidate CU 706 transmits the HO request ACK message in step 729, the candidate CU 706 may transfer at least one of pieces of information regarding newly admitted candidate cells to DUs of the other candidate CU 707 in step 730. Although illustrated as being transmitted to the candidate DU 705, the information regarding admitted candidate cells may be transmitted to the candidate DUs (not illustrated) of candidate CU2 707. Upon receiving this, the DUs 705 may store corresponding information and, after the UE 701 moves to their candidate cell, may cause the same to perform a cell switch command through the given information. The information transferred to each DU by the candidate CU 706 through a UE context modification request or an F1 message corresponding thereto may include all or part of information transferred by the candidate CU 706 to the source CU 704 in step 279. Upon receiving the message, each DU may transmit a response message, for example, a UE context modification response message or an F1 message corresponding thereto, to the candidate CU 706.

In step 733, using the information received in step 729, the source CU 704 may transfer corresponding information to the source DU 702 and other DUs 703 managed by the source CU 704 thereof. This process may be enabled by a UE context modification request message and an F1 message corresponding thereto. The transferred information may include all or part of information included in the message transferred in step 729.

Upon receiving above information, the DUs 702 and 703 (including the source DU 702) of the source CU 704 may refer to CSI resources of candidate cells of the newly admitted candidate CU 706 and, in the case that its candidate cells are source cells, may modify the LTM-CSI-resource config to perform L1 measurement. (That is, the SSB/CSI-RS index of the new candidate cell may be added as a measurement target). In this regard, the LTM-CSI-ReportConfig that refers to the modified LTM-CSI-resource config may also be updated. In addition, the lower layer configuration may be updated as needed.

In step 735, the DUs 702 and 703 of each source CU 704 may transfer updated CSI-related information and updated lower layer configuration information to the source CU 704. This process may be enabled by a UE context modification response message and an F1 message corresponding thereto.

Upon receiving above information, the source CU 704 may transfer the received information to the candidate CU 706 in step 740. The information transfer may be performed by using an HO request message or a new Xn message. Accordingly, the candidate CU 706 may transmit the updated LTM CSI resource config, LTM CSI-reportConfig, and lower layer configurations to the DUs 705 of the candidate CU 706 in association with the ID (PCI or CGI with ARFCN or LTM config ID) of respective candidate cells.

After receiving the information in step 740, the candidate CU 706 may transfer the received updated information to its DUs 705. Then, in step 743, the candidate CU 706 may transmit a response message to the source CU 704. The response message may include an HO response message or a new Xn message. The response message may include updated information.

In step 745, the source CU 704 may aggregate above information and generate an ltm-Config. The ltm-Config may include at least one of the following pieces of information with regard to each candidate cell.
A. LTM configuration ID,
B. Candidate cell PCI and/or CGI with AFRCN
C. SSB config
D. Target cell configuration (RRCReconfig msg)
E. TCI state configuration
F. CSI-RS resource config
G. Using early TA indicator
H. RACH-less execution indicator

In step 750, the source CU 704 may transfer an MN RRCReconfiguration message (RRC reconfiguration message) including a list of LTM-CSI-ResourceConfigs in a common (not cell-specific) field to the UE 701. In addition, a reference configuration may be given, and in this case, multiple reference configurations may exist. Accordingly, the source CU 704 may transmit, to the UE 701, a reference configuration applicable to each of the candidate cells and, for this association, may assign a specific ID to each reference configuration and may assign one of the IDs to each candidate cell so that the UE 701 may distinguish the same during application.

In the serving cell configuration of the current Pcell of the UE 701, some of the configuration IDs of the LTM-CSI-ResourceConfigs may be referred to, and an LTM-CSI-ReportConfig may be configured and transferred.

The RRC reconfiguration message may be included in a DL RRC message and transferred from the source CU 704 to the source DU 702 in step 750, and the source DU 702 may transmit the RRC reconfiguration message to the UE 701 in step 753. The UE 701 may transmit an RRC reconfiguration complete message to the source DU 702 in step 755. The source DU 702 may transmit an UL RRC message including the received RRC reconfiguration complete message to the source CU 704 in step 757. Thereafter, in step 770, in case that the network indicates activation of the TCI state ID of a specific candidate cell to the UE 701 through a MAC CE, the UE 701 may perform DL synchronization by referring to the TCI state, and may measure the resources of CSI resources indicated in the LTM-CSI-ResourceConfig referred to in the LTM-CSI-ReportConfig, based on the same. In addition, report transmission configured in this LTM-CSI-ReportConfig may be performed.

Regardless of the DL synchronization and CSI measurement, in step 760, the source CU 704 may request early TA acquisition. In this case, the UE 701 may transmit a RACH preamble with respect to a candidate cell (candidate DU 705) indicated in the request

After detecting the RACH preamble transmission, the candidate cell (candidate DU 705) may notify the candidate CU 706 of TA detection through a DU-CU TA info transfer message in step 761. The candidate CU 706 may estimate the TA value, and if the same determined to be valid, may notify the source CU 704 of the TA value measurement through an Xn TA info transfer message or a message corresponding thereto in step 763. The message may include at least one of the following pieces of information: an estimated TA value, a probability value or an accuracy value indicating the accuracy of the TA value, and the LTM config ID or PCI or CGI of the cell that detected the preamble.

In step 765, the source CU 704 having acquired above information may transfer the TA value to the source DU 702. A CU-DU TA info transfer message may be used in this case. The source DU 702 that has maintained the TA value may transfer an LTM cell switch command including the TA value to the UE 701. In this case, the UE 701 may perform RACH-less handover through early TA by using the TA value.

The source DU 702 may determine an LTM cell switch in step 773, based on the L1 measurement result report received from the UE 701 in step 770. The source DU 702 may transmit a cell switch command to the UE 701 in step 775. The source DU 702, which has transmitted the cell switch command, may inform the source CU 704 that a cell switch has been performed in step 777 (e.g., DU-CU cell switch notification message). The message may include a target cell ID, a TCI state ID, and the like. Upon receiving the same, the source CU 704 may, in step 779, transmit an Xn message to the CU of the target candidate cell (i.e., the candidate CU 706) to notify that the LTM cell switch has been performed. This message may include at least one of an Xn AP UE ID, the ID (PCI or CGI with AFRCN) of the target cell of the cell switch command, and a TCI state ID value indicated during the cell switch. The message may be an LTM cell switch notification message.

After receiving above information, the candidate CU 706 may notify the candidate DU 705 that a cell switch command is performed, for example, by using a cell switch notification message in step 780. If the candidate DU 705 successfully receives the UL data transmission in step 783 and determines that the access is successful, the candidate DU 705 may inform the candidate CU 706 of the result in step 785. According to the embodiment, the candidate DU 705 may transmit a target cell ID, a UE ID, and the like to the candidate CU 706 together.

In step 790, the UE 701 may transmit an RRC reconfiguration complete message to the candidate DU 705 to perform an LTM cell switch. In step 793, the candidate DU 705 may transmit a UL RRC MSG transfer message to the candidate CU 706, based on the received message. The UL RRC MSG transfer message may include an RRC reconfiguration complete message received from the UE 701.

In step 795, the candidate CU 706 may notify the source CU 704 of the success of the HO.

In step 797, the source CU 706 may transmit a cell switch complete message to the other candidate CU (candidate CU2 707) to inform that the cell switch of the UE 701 is completed. The message may include a UE ID, a target cell ID, and the like.

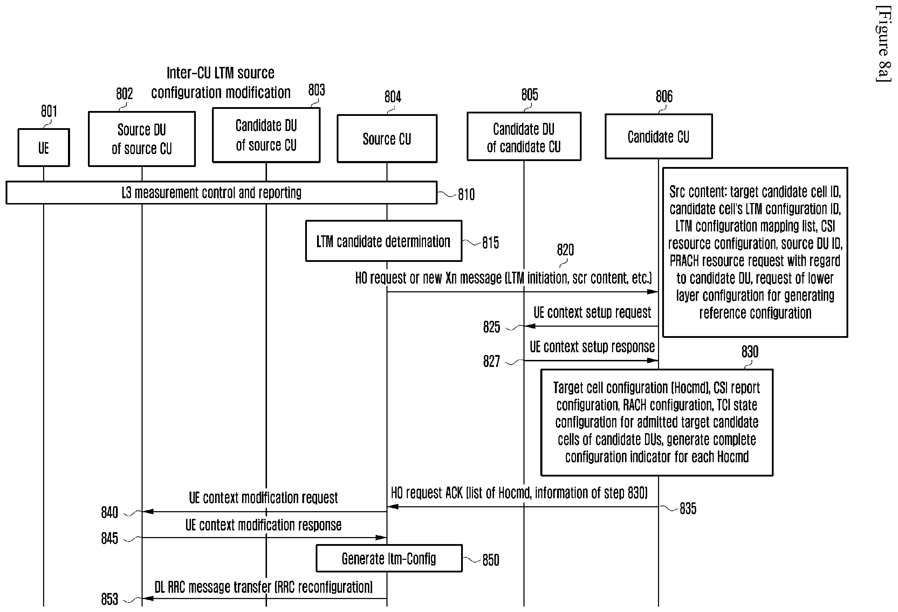

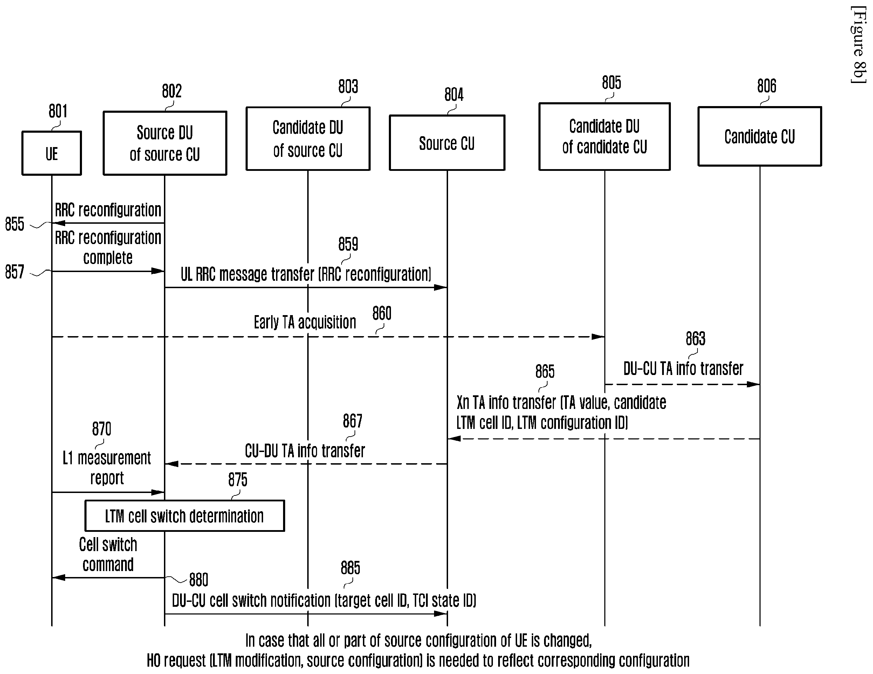

FIG. 8A and FIG. 8B are diagrams illustrating an example of a case in which the source configuration is changed in inter-CU MCG LTM according to an embodiment of the disclosure.

The embodiment illustrated in FIG. 8A and FIG. 8B relates to a case wherein if a configuration change occurs in the source cell after the LTM preparation illustrated in FIG. 7A and FIG. 7B is over, the source CU 804 sends the changed source configuration to the candidate CU 806 and transfers an indicator indicating an LTM configuration change together therewith.

Referring to FIG. 8A and FIG. 8B, in step 810, the UE 801 is connected to the source CU 804, and is also connected to the source DU 802 that operates a serving cell of the source CU 804. After receiving the L3 measurement configuration transferred through the source CU 804, the UE 801 may transfer the corresponding measurement result report to the source CU 804 through the source DU 802.

In step 815, the source CU 804 may determine a candidate cell of LTM, based on the measurement result from the UE 801, and may determine LTM preparation.

In step 820, the source CU 804 may request the candidate CU 806 that operates the determined candidate cell to allocate resources to the UE 801 through an existing HO request message or a separate message (for example, a new Xn message). The message may include at least one of the following pieces of information.
A. Indicator for performing LTM
   i. An indicator may be additionally included to indicate whether the request is for modification after the first.
B. UE ID
C. The ID of the source CU 804 and/or the ID of source DU 802, and/or the transport network layer (TNL) address (e.g., IP address) of the source DU 802
D. The ID (physical cell identity (PCI) or NR cell global identity (CGI) with NR absolute radio frequency channel number (ARFCN)) of the candidate cell of request
E. The LTM configuration ID of this candidate cell (if accepted, the source DU 802 may use the LTM config ID during a cell switch to the target cell).
F. The LTM configuration ID mapping list: when transferred to the candidate DU 805, this information indicates LTM configurations that the candidate DU 805 can currently operate and their cell mapping relationship
   i. Opt 1. The candidate cell list may be a list of candidate cells operated by all candidate CU 806 for the corresponding UE 801, or
   ii. Opt 2. The list may include only candidate cells operated by the source CU 804 that transmits the HO request message.
G. Configuration information of CSI resources transmitted by all candidate cells currently configured
H. Indicator for requesting PRACH resource information with regard to the target candidate cell
I. Indicator for requesting a lower layer configuration with regard to the target candidate cell

Obviously, the message may include not only the above information, but also pieces of information that have been conventionally used in the HO request message. Information included in the HO request message may refer to Table 1 above.

In step 825, the candidate CU 806 may transfer at least one of the following pieces of information to the candidate DU 805 corresponding to the requested candidate cell. This information may be transmitted while being included in a UE context setup request message of the F1 interface or a new F1 message.
A. Information received by the candidate CU 806 from the source CU 804
   i. Target candidate cell ID: an ID, PCI, or NR CGI indicating a candidate target cell.
   ii. Configuration ID during use in the LTM mapped to the corresponding candidate cell, i.e., the LTM configuration ID of the candidate cell,
   iii. LTM configuration ID mapping list: information of the LTM candidate ID and the cell ID that have been allocated until now
      1. Opt 1. This information may include candidate cells operated by all candidate CU 806
      2. Opt 2. The same may include only candidate cells operated by the source CU 804. In this case, the candidate CU 806 may separately transfer mapping information between the LTM configuration ID and the candidate cell in addition to information of the candidate cells operated by the candidate CU 806.
   iv. CSI resource configuration: CSI resource configuration information transmitted by candidate cells that have been operated until now may be transferred. In this case, information may be distinguished according to opt 1 and opt 2 and then transferred.
   v. An indicator for requesting PRACH resource information with regard to a target candidate cell
   vi. An indicator for requesting a lower layer configuration with regard to a target candidate cell
B. Additionally, the candidate CU 806 may transfer information held thereby. In the case of op. 2, information regarding LTM candidate cells operated by the candidate CU 806 may be transferred.
   i. Target candidate cell ID: may be an ID, PCI, or NR CGI indicating a candidate target cell.
   ii. Configuration ID during use in the LTM mapped to the corresponding candidate cell, i.e., the LTM configuration ID of the candidate cell,
   iii. LTM configuration ID mapping list: information of the LTM candidate ID and the cell ID that have been allocated until now
      1. Opt 1. This information may include candidate cells operated by all candidate CU 806
      2. Opt 2. The same may include only candidate cells operated by the source CU 804. In this case, the candidate CU 806 may separately transfer mapping information between the LTM configuration ID and the candidate cell to the candidate DU 805 in addition to information of the candidate cells operated by the candidate CU 806.
   iv. CSI resource configuration: CSI resource configuration information transmitted by candidate cells that have been operated until now may be transferred. In this case, information may be distinguished according to opt 1 and opt 2 and then transferred.
   v. An indicator for requesting PRACH resource information with regard to a target candidate cell
   vi. An indicator for requesting a lower layer configuration with regard to a target candidate cell

After receiving above information, the candidate DU 805 may accept or reject the LTM resource request regarding the corresponding UE 801. When accepting, the candidate DU 805 may notify the candidate CU 806 of the acceptance result through a UE context setup response message or an F1 message corresponding thereto in step 827. The message may additionally include the following pieces of information.
A. Generated lower layer RRC configuration
   i. This information may be a cellGroupConfiguration in RRC.
   ii. If the lower layer configuration is a complete configuration, an indicator indicating the complete configuration may also be included.
B. SSB time/frequency information transmitted in the corresponding candidate cell may be transferred.
   i. This information is collected by the candidate CU 806 from each DU 805 and candidate cells and transmitted to the UE 801, and may be referred to as an element of the CSI resource referred to in the CSI report configuration of the LTM.
   ii. The same may also be referred to for DL or UL or joint TCI state information.
C. DL or UL or joint TCI state configuration information currently operated in the corresponding candidate cell: the configuration information may be configured for the UE 801 by the CU by using RRC, and a specific TCI state may be activated/deactivated through a candidate cell TCI state activation/deactivation MAC CE. Through the activated TCI state, the UE 801 may perform DL synchronization before a cell switch command. In addition, in a cell switch command, one DL or joint and/or UL TCI state among the TCI states may be signaled, thereby instructing the UE 801 to activate the indicated TCI state of the corresponding candidate cell and instantly use the same during a cell switch.
D. RACH configuration information: RACH configuration information used in the corresponding candidate cell
E. CSI report configuration information: with reference to the CSI resource configurations of all candidate cells given from the candidate CU 806, the candidate DU 805 may generate a CSI report configuration. This information may include an instruction to measure which CSI resource of which cell, and a report configuration such as periodic, semi-persistent, or persistent. Thereafter, the same may be included in the target cell configuration and used to automatically perform L1 measurement and reporting for LTM, without a separate configuration, when the UE 801 moves to this cell.

After receiving above information, the candidate CU 806 may compose (generate) a HO command message (e.g., RRCReconfiguration) regarding the corresponding candidate cell in step 830.

The candidate CU 806 may transfer this information to the source CU 804 in step 835. The HO command message may be included in an HO request acknowledgement (ACK) message or a new/or existing message of XN corresponding thereto.
A. Opt 1. In case that the candidate CU 806 receives an HO request regarding one candidate target cell from the source CU 804, the candidate CU 806 may transfer information regarding the corresponding one target cell to the source CU 804.
B. Opt 2. Even if the candidate CU 806 receives an HO request regarding one candidate target cell from the source CU 804, if there is a new message regarding other candidate cells for which admission has been allowed with regard to LTM candidate cells regarding the same UE 801 at a timepoint at which the candidate CU 806 sends the HO request ACK message, the HO request ACK message may include information regarding all newly allowed candidate cells and transferred to the UE 801 in a batch (through the source CU 804).
C. Opt 3. In case that the candidate CU 806 receives an LTM preparation request from the source CU 804 with regard to multiple candidate target cells operated by the corresponding CU (candidate CU) 806, the candidate CU 806 may collect information regarding all other candidate cells for which admission has been allowed, and may transfer the HO request ACK message, including the collected information, to the source CU 804.
D. With respect to each admitted candidate cell, this message may include at least one of the following pieces of information. The candidate CU 806 may distinguish a PCI for distinguishing each candidate cell or an NR CGI with ARFCN or an LTM configuration ID of each candidate cell assigned by the source CU 804, and may include the following information therein.
   i. Target cell configuration (e.g., RRCReconfiguration)
   ii. An indicator indicating whether the target cell configuration is a complete configuration or no
   iii. TCI state configuration (DL or joint and/or UL TCI state)
   iv. CSI report configuration
   v. CSI resource configuration information transmitted in each cell
   vi. RACH configuration
E. The following information may be included with regard to each of the candidate CUs 706 and 707, not with regard to each cell.
   i. LTM reference configuration for this candidate CU's candidate cells
      1. An ID (e.g., gNB ID or an integer ID allocated by the source CU 804 to the candidate CU 806) for distinguishing the candidate CU 806 may be transferred to the UE 801 in association with each candidate cell configuration information
      2. Thereafter, in case that the UE 801 receives a cell switch command to a specific cell, the reference configuration associated with the specific cell may be applied
   ii. LTM CSI-resource configuration information
      1. The LTM CSI-Resource configuration may include an LTM CSI resource config determined by the DU 805 of each candidate cell with regard to each admitted candidate cell in the candidate CU 806.
         A. In case that the one candidate cell is considered as a source cell, CSI resources transmitted in all or some specific candidate cells, excluding that cell, may be indicated. A bit list obtained by mapping the LTM config ID of each cell and the SSB index or CSI-RS resource ID considered as CSI in that cell may be included in association with the LTM config ID of the source cell.

Alternatively, after receiving the information in step 820, the candidate CU 806 may update the config of a previously defined LTM candidate or lower layer configuration information as necessary in step 835, and then transfer the same to the UE 801 through the source CU 804.

Although not illustrated, before or immediately after the candidate CU 806 transmits the HO request ACK message, the candidate CU 806 may transfer at least one of pieces of information regarding newly admitted candidate cells to DUs of the other candidate CU (not illustrated). Upon receiving this, the DUs may store corresponding information and, after the UE 801 moves to their candidate cell, may cause the same to perform a cell switch command through the given information. The information transferred to each DU by the candidate CU 806 through a UE context modification request or an F1 message corresponding thereto may include all or part of information transferred by the candidate CU 806 to the source CU 804 in step 835.

In step 840, using the information received in step 835, the source CU 804 may transfer corresponding information to the source DU 802 and other DUs 803 managed by the source CU 804 thereof. This process may be enabled by a UE context modification request message and an F1 message corresponding thereto. The transferred information may include all or part of information included in the message transferred in step 835.

Upon receiving above information, the DUs 802 and 803 (including the source DU 802) of the source CU 804 may refer to CSI resources of candidate cells of the newly admitted candidate CU 806 and, in the case that its candidate cells are source cells, may modify the LTM-CSI-resource config to perform L1 measurement. (That is, the SSB/CSI-RS index of the new candidate cell may be added as a measurement target). In this regard, the LTM-CSI-ReportConfig that refers to the modified LTM-CSI-resource config may also be updated. In addition, the lower layer configuration may be updated as needed.

In step 845, the DUs 802 and 803 of each source CU 804 may transfer updated CSI-related information and updated lower layer configuration information to the source CU 804. This process may be enabled by a UE context modification response message and an F1 message corresponding thereto.

Although not illustrated, upon receiving above information, the source CU 804 may transfer the received information to the candidate CU 806. The information transfer may be performed by using an HO request message or a new Xn message. Accordingly, the candidate CU 806 may transmit the updated LTM CSI resource config, LTM CSI-reportConfig, and lower layer configurations to the DUs 805 of the candidate CU 806 in association with the ID (PCI or CGI with ARFCN or LTM config ID) of respective candidate cells.

After receiving above information, the candidate CU 806 may transfer the received updated information to its DUs 805. The candidate CU 806 may transmit a response message to the source CU 804. The response message may include an HO response message or a new Xn message. The response message may include updated information.

In step 850, the source CU 804 may aggregate above information and generate an ltm-Config. The ltm-Config may include at least one of the following pieces of information with regard to each candidate cell.
A. LTM configuration ID,
B. Candidate cell PCI and/or CGI with AFRCN
C. SSB config
D. Target cell configuration (RRCReconfig msg)
E. TCI state configuration
F. CSI-RS resource config
G. Using early TA indicator
H. RACH-less execution indicator

In step 853, the source CU 804 may transfer an MN RRCReconfiguration message including a list of LTM-CSI-ResourceConfigs in a common (not cell-specific) field to the UE 801. In addition, a reference configuration may be given, and in this case, multiple reference configurations may exist. Accordingly, the source CU 804 may transmit, to the UE 801, a reference configuration applicable to each of the candidate cells and, for this association, may assign a specific ID to each reference configuration and may assign one of the IDs to each candidate cell so that the UE 801 may distinguish the same during application.

In the serving cell configuration of the current Pcell of the UE 801, some of the configuration IDs of the LTM-CSI-ResourceConfigs may be referred to, and an LTM-CSI-ReportConfig may be configured and transferred.

The RRC reconfiguration message may be included in a DL RRC message and transferred from the source CU 804 to the source DU 802 in step 853, and the source DU 802 may transmit the RRC reconfiguration message to the UE 801 in step 855. The UE 801 may transmit an RRC reconfiguration complete message to the source DU 802 in step 857. The source DU 802 may transmit an UL RRC message including the received RRC reconfiguration complete message to the source CU 804 in step 859.

Thereafter, in step 870, in case that the network indicates activation of the TCI state ID of a specific candidate cell to the UE 801 through a MAC CE, the UE 801 may perform DL synchronization by referring to the TCI state, and may measure the resources of CSI resources indicated in the LTM-CSI-ResourceConfig referred to in the LTM-CSI-ReportConfig, based on the same. In addition, report transmission configured in this LTM-CSI-ReportConfig may be performed.

Regardless of the DL synchronization and CSI measurement, in step 860, the source CU 804 may request early TA acquisition. In this case, the UE 801 may transmit a RACH preamble with respect to a candidate cell (candidate DU 805) indicated in the request.

After detecting the RACH preamble transmission, the candidate cell (candidate DU 805) may notify the candidate CU 806 of TA detection through a DU-CU TA info transfer message in step 863. The candidate CU 806 may estimate the TA value, and if the same determined to be valid, may notify the source CU 804 of the TA value measurement through an Xn TA info transfer message or a message corresponding thereto in step 865. The message may include at least one of an estimated TA value, a probability value or an accuracy value indicating the accuracy of the TA value, and the LTM config ID or PCI or CGI of the cell that detected the preamble.

In step 867, the source CU 804 having acquired above information may transfer the TA value to the source DU 802. A CU-DU TA info transfer message may be used in this case. The source DU 802 that has maintained the TA value may transfer an LTM cell switch command including the TA value to the UE 801. In this case, the UE 801 may perform RACH-less handover through early TA by using the TA value.

The source DU 802 may determine an LTM cell switch in step 875, based on the L1 measurement result report received from the UE 801 in step 870. The source DU 802 may transmit a cell switch command to the UE 801 in step 880. The source DU 802, which has transmitted the cell switch command, may inform the source CU 804 that a cell switch has been performed in step 885 (e.g., DU-CU cell switch notification message). The message may include a target cell ID, a TCI state ID, and the like. Upon receiving the same, the source CU 804 may transmit an Xn message to the CU of the target candidate cell (i.e., the candidate CU 806) to notify that the LTM cell switch has been performed. This message may include at least one of an Xn AP UE ID, the ID (PCI or CGI with AFRCN) of the target cell of the cell switch command, and a TCI state ID value indicated during the cell switch. The message may be an LTM cell switch notification message.

Although not illustrated, after receiving above information, the candidate CU 806 may notify the candidate DU 805 that a cell switch command is performed, for example, by using a cell switch notification message. If the candidate DU 805 successfully receives the UL data transmission and determines that the access is successful, the candidate DU 805 may inform the candidate CU 806 of the result. According to the embodiment, the candidate DU 805 may transmit a target cell ID, a UE ID, and the like to the candidate CU 806 together.

Although not illustrated, the UE 801 may transmit an RRC reconfiguration complete message to the candidate DU 805 to perform an LTM cell switch. The candidate DU 805 may transmit a UL RRC MSG transfer message to the candidate CU 806, based on the received message. The UL RRC MSG transfer message may include an RRC reconfiguration complete message received from the UE 801.

Although not illustrated, the candidate CU 806 may notify the source CU 804 of the success of the HO.

Although not illustrated, the source CU 804 may transmit a cell switch complete message to the other candidate CU (candidate CU2 (not illustrated)) to inform that the cell switch of the UE 801 is completed. The message may include a UE ID, a target cell ID, and the like.

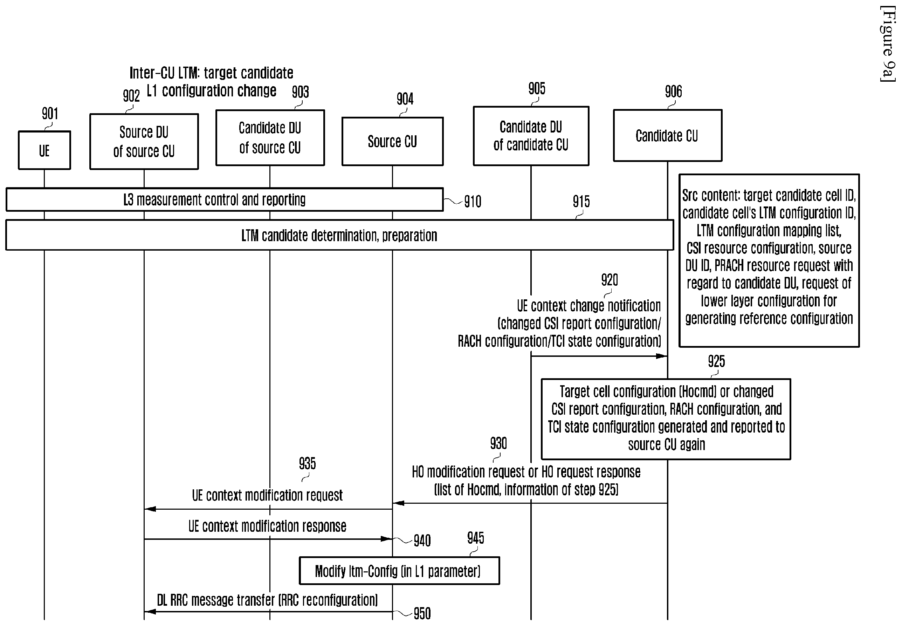

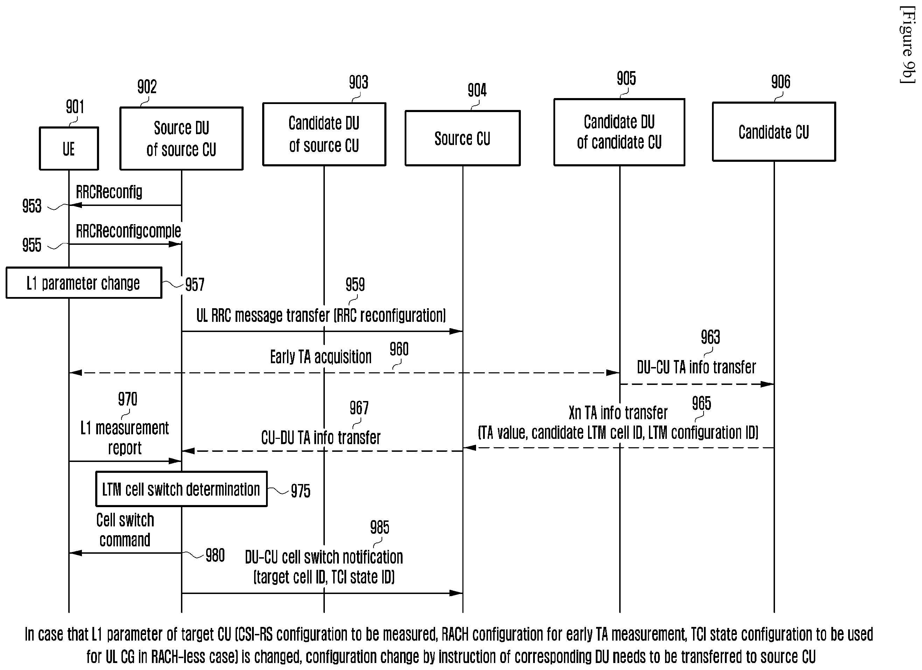

FIG. 9A and FIG. 9B are diagrams illustrating an example of operations in case that a configuration change occurs in a target DU according to an embodiment of the disclosure.

Referring to FIG. 9A and FIG. 8B, in step 910, the UE 901 is connected to the source CU 904, and is also connected to the source DU 902 that operates a serving cell of the source CU 904. After receiving the L3 measurement configuration transferred through the source CU 904, the UE 901 may transfer the corresponding measurement result report to the source CU 904 through the source DU 902.

According to the embodiment related to FIG. 7A and FIG. 7B or FIG. 8A and FIG. 8B, the LTM candidate determination and preparation may be completed in step 915.

In case that a change in at least one of CSI report config, RACH config, and TCI state occurs in one of the candidate DUs 905, the corresponding change may be notified to the candidate CU 906 by the candidate DU 905 in step 920. This may be performed by a UE context change notification message or a new F1 message. The message may include at least one of the related UE ID (F1 AP UE ID or Xn AP UE ID) and the changed configuration information. The candidate CU 906 may provide the changed information to its DU such that each DU changes the LTM configuration as needed, and if a changed configuration exists, the changed configuration may be transferred by each DU to the candidate CU 906.

In step 925, the candidate CU 906 may change the HO command, based on the information received from the candidate DU 905. In addition, the candidate CU 906 may change the CSI report Config, CSI resource config, RACH config, TCI state config, and the like, based on received information

In step 930, the candidate CU 906 may transfer the changed configuration information to the source CU 904. This information may be performed by using an HO modification message or an HO request ACK message or a separate Xn message. This message may include at least one of an indicated UE ID, a changed HO command, changed CSI report Config, CSI resource config, RACH config, and TCI state config.

In step 925, the source CU 904 may transfer the changed configuration information to the source DU 902 and other DUs 903 managed by the source CU 904. This process may be enabled by a UE context modification request message and an F1 message corresponding thereto. The transferred information may include all or part of the information included in the message transferred in step 930. Upon receiving the configuration information to be changed, DUs 902 and 903 (including the source DU 902) of the source CU 904 may transmit a response (e.g., a UE context modification response message) to the source CU 904 in step 940.

In step 945, the source CU 904 may aggregate the information and change the ltm-Config.

In addition, the source CU 904 may generate an RRC reconfiguration message in which the modified ltm-Config is reflected, and transmit the same to the UE 901 in step 950. The RRC reconfiguration message may be included in a DL RRC message and transferred from the source CU 904 to the source DU 902 in step 950, and the source DU 902 may transmit the RRC reconfiguration message to the UE 901 in step 953. The UE 901 may transmit an RRC reconfiguration complete message to the source DU 902 in step 955. In step 957, the UE 901 may change the L1 parameter, based on the received RRC reconfiguration message. Prior to transmitting the RRC reconfiguration complete message in step 955, the UE 901 may also change an L1 parameter in step 957. The source DU 902 may transmit an UL RRC message including the received RRC reconfiguration complete message to the source CU 904 in step 959.

The operations in steps 960 to 985 below are similar to the above-described operations in FIG. 7A and FIG. 7B and FIG. 8A and FIG. 8B, detailed descriptions thereof will thus be omitted.

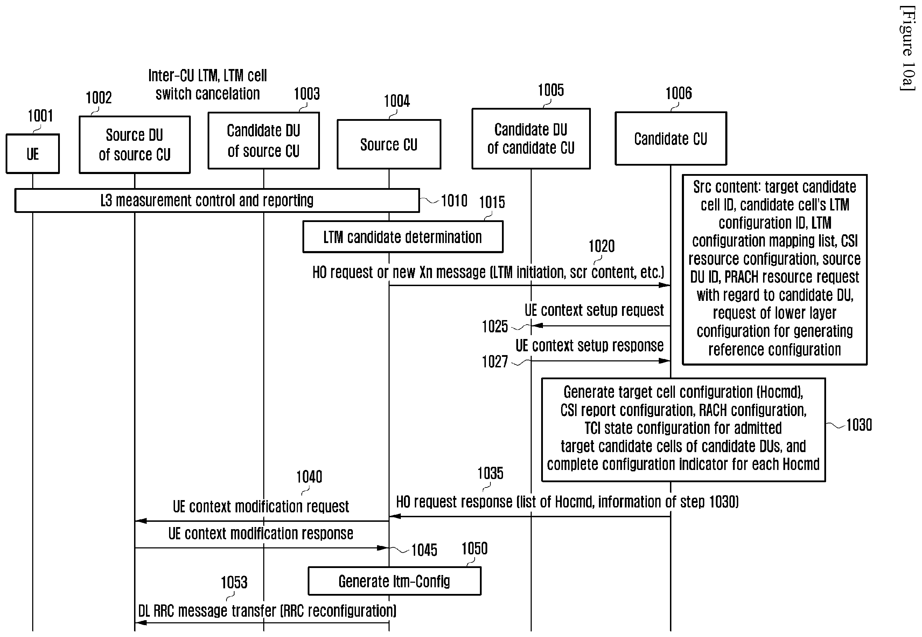

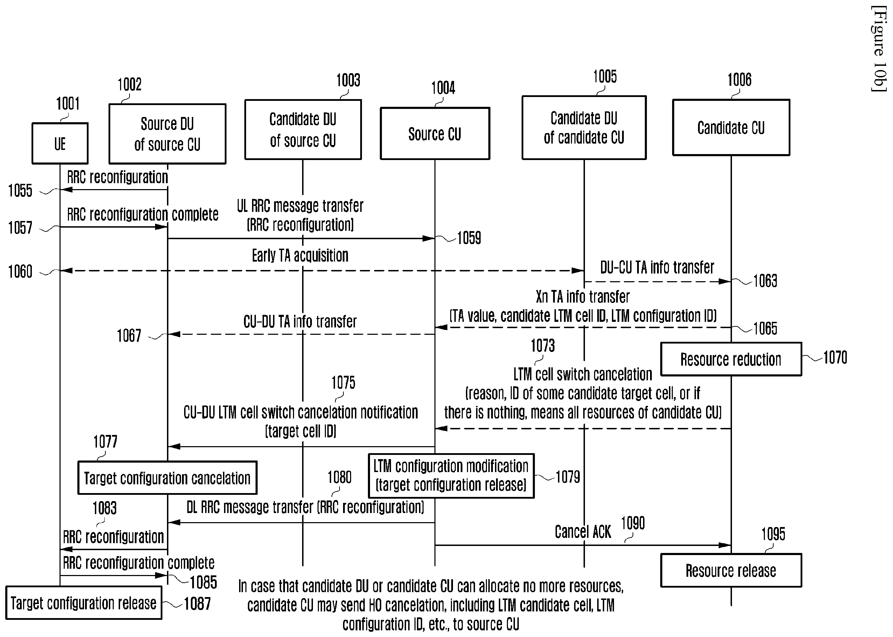

FIG. 10A and FIG. 10B are diagrams illustrating an example of operations in case that LTM preparation has been performed and then canceled according to an embodiment of the disclosure.

Referring to FIG. 10A and FIG. 10B, in step 1010, the UE 1001 is connected to the source CU 1004, and is also connected to the source DU 1002 that operates a serving cell of the source CU 1004. After receiving the L3 measurement configuration transferred through the source CU 1004, the UE 1001 may transfer the corresponding measurement result report to the source CU 1004 through the source DU 1002.

According to the embodiment related to FIG. 7A and FIG. 7B or FIG. 8A and FIG. 8B, LTM candidate determination and preparation may be completed in steps 1015 to 1067. Detailed descriptions have already been made, and will be omitted herein.

Then, an LTM cell switch cancel may be performed.

In case that the candidate DU 1005 or the candidate CU 1006 can no longer assign resources, or as needed, or according to a preconfigured condition (e.g., a pre-configured time has expired), the candidate CU 1006 may determine to notify that the LTM cell switch that has been prepared is to be canceled in step 1070. To this end, in step 1073, the candidate CU 1006 may transmit, for example, an LTM cell switch cancel message to the source CU 1004. The message for indicating canceling of the LTM cell switch may include the following information.

The message may include at least one of an S RAN node UE XnAP ID, a target RAN node UE XnAP ID, a cause value, an LTM candidate cell to be a target, and a related LTM config ID. According to the embodiment, in case that the candidate cell information to be the target is not included in the message, it may mean that all resources included in the candidate CU 1006 are the target.

According to the notification, in step 1075, the source CU 1004 may notify the source DU 1002 that the LTM cell switch is canceled. The information for notifying the LTM cell switch cancel may be transmitted while being included in a CU-DU LTM cell switch cancel notification message. The source DU 1002 may cancel the target configuration in step 1077, and the source CU 1004 may modify the LTM configuration in step 1079. The modification may include releasing the target configuration.

In step 1080, the source CU 1004 may indicate a configuration release to the UE 1001. Information indicating the configuration release may be included in a DL RRC message and transferred from the source CU 1004 to the source DU 1002, and the DL RRC message may include an RRC reconfiguration message. In step 1083, the source DU 1002 may transmit an RRC reconfiguration message to the UE 1001. Upon receiving the message indicating the release of the configuration, the UE 1001 may transmit a complete message to the source CU 1004 (through the source DU 1002) in step 1085. The complete message may be an RRC reconfiguration complete message.

In step 1090, the source CU 1004 may transmit a message such as a cancel ACK to the candidate CU 1006. The candidate CU 1006 may remove (release) resources in step 1095. The UE 1001 may release the configuration information regarding the target cell in step 1087. According to an embodiment, step 1087 may be performed before the transmission of the RRC reconfiguration complete message in step 1085.

According to an embodiment, the source CU 1004 or the source DU 1002 may also cancel the LTM cell switch. In this case, a new message may be defined to indicate that the LTM cell switch has been canceled, or an existing message for CHO may be reused. In steps 1075 to 1085, the source CU 1004 may notify the source DU 1002 that the LTM cell switch is canceled, and may indicate a configuration release to the UE 1001. Alternatively, in case that the source DU 1002 determines to cancel the LTM cell switch, the source DU 1002 may inform the source CU 1004 of the cancellation of the LTM cell switch (not illustrated), and the source CU 1004 may accordingly indicate a configuration release to the UE 1001 in steps 1080 to 1085 accordingly. The source CU 1004 may notify the candidate CU 1006 of cancellation of the LTM cell switch (not illustrated). The candidate CU 1006 may transmit a response thereto to the source CU 1004 (not illustrated). The source CU 1004 may remove (release) resources (not illustrated), and the UE 1001 may release the configuration information in step 1087.

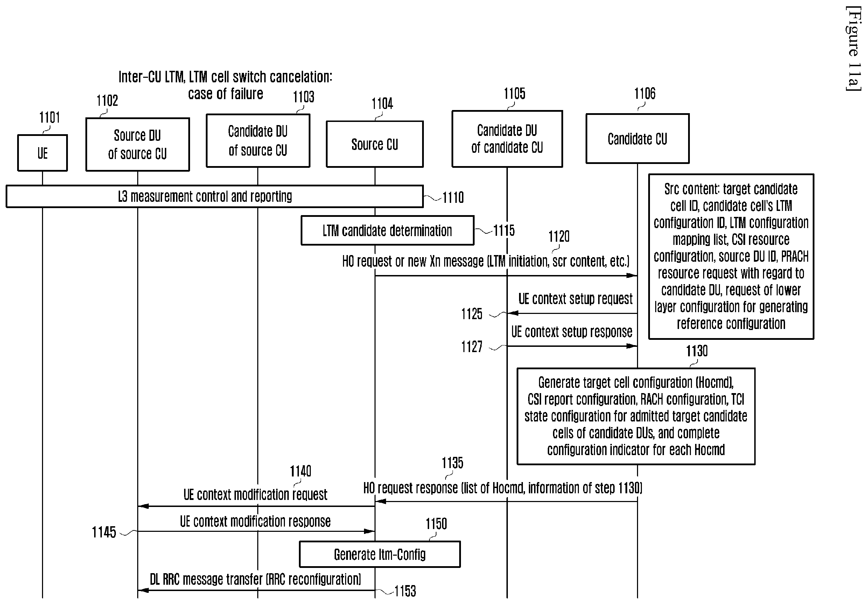

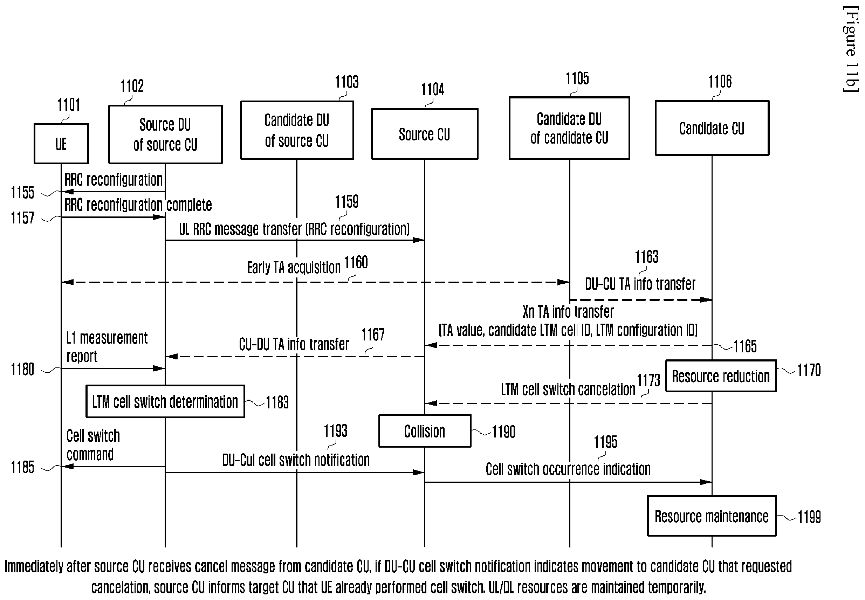

FIG. 11A and FIG. 11B are diagrams illustrating an example of operations in case that there are conflicting commands to perform and cancel a cell switch according to an embodiment of the disclosure.

Referring to FIG. 11A and FIG. 11B, in step 1110, the UE 1101 is connected to the source CU 1104, and is also connected to the source DU 1102 that operates a serving cell of the source CU 1104. After receiving the L3 measurement configuration transferred through the source CU 1104, the UE 1101 may transfer the corresponding measurement result report to the source CU 1104 through the source DU 1102.

According to the embodiment related to FIG. 7A and FIG. 7B or FIG. 8A and FIG. 8B, LTM candidate determination and preparation may be completed in steps 1115 to 1167. Detailed descriptions have already been made, and will be omitted herein.

As described in the embodiment in FIG. 10A and FIG. 10B, a cell switch cancel may occur.

In case that the candidate DU 1105 or the candidate CU 1106 can no longer allocate resources, or as needed, or according to a preconfigured condition (e.g., a preconfigured time has expired), the candidate CU 1106 may determine to notify of the cancellation of the prepared LTM cell switch in step 1170. To this end, in step 1173, the candidate CU 1106 may transmit, for example, an LTM cell switch cancel message to the source CU 1104. The message for notifying of the cancellation of the LTM cell switch may include at least one of an S RAN node UE XnAP ID, a target RAN node UE XnAP ID, a cause value, a target LTM candidate cell, and a related LTM config ID.

Meanwhile, in the case of the cell switch cancel, the source CU 1104 may receive a cell switch notification message from the source DU 1102 in step 1193 before receiving a message requesting/indicating the cancel from the candidate CU 1106. The operations in which the UE 1101 reports L1 measurement to the source DU 1102 in step 1180, the source DU 1102 determines the LTM cell switch in step 1183, the source DU 1102 transmits a cell switch command to the UE 1101 in step 1185, and the source CU 1104 receives a cell switch notification message from the source DU 1102 in step 1193 have been described in detail in the embodiment related to FIG. 7 or FIG. 8 and will be omitted herein.

In this case, a collision between a cell switch cancel and a cell switch notification may occur as in step 1190. Although step 1190 is illustrated as occurring before step 1193 in the drawings, step 1190 may occur after step 1193. In this case, the source CU 1104 may ignore the received cell switch notification. In this case, the UE 1101 may not receive a response regarding RACH transmission or may not receive a response regarding UL grant CG usage. As a result, a radio link failure (RLF) may occur, or the UE 1101 may move to an RRC idle state.

Alternatively, according to an embodiment, after the source CU 1104 receives a cell switch notification message, and if a cell switch cancel indication is received from the candidate CU 1106, the source CU 1104 may transmit a cell switch happened indication to the candidate CU 1106 in step 1195, and the candidate CU 1106 may maintain resources for a specific time in step 1199.

It should be noted that the configuration diagrams, illustrative diagrams of control/data signal transmission methods, illustrative diagrams of operation procedures, and structural diagrams as illustrated in FIG. 1 to FIG. 11B are not intended to limit the scope of protection of the disclosure. That is, all the constituent units, entities, or operation steps shown in FIG. 1 to FIG. 11B should not be construed as essential elements for implementing the disclosure, and even when including only some of the elements, the disclosure may be implemented without impairing the true nature of the disclosure.

Methods disclosed in the claims or methods according to the embodiments described in the specification of the disclosure may be implemented by hardware, software, or a combination of hardware and software.

When implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memory including random access memory and flash memory, a read only memory (ROM), electrically erasable programmable read only memory (EEPROM), a magnetic disc storage device, a compact disc-ROM (CD-ROM), digital versatile discs (DVDs), or other type optical storage devices, or a magnetic cassette. Alternatively, the program may be stored in a memory configured as a combination of some or all of them. In addition, a plurality of such memories may be included.

In addition, the programs may be stored in an attachable storage device which is accessible to the electronic device through communication networks such as the Internet, Intranet, local area network (LAN), wide LAN (WLAN), and storage area network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

## Claims

1. A method performed by a central unit (CU) of a source base station in a wireless communication system, the method comprising:
transmitting, to a CU of at least one candidate base station associated with at least one candidate cell for inter-CU layer 1/layer 2 (L1/L2) triggered mobility (LTM), a first message for requesting information for LTM configuration;
receiving, from the CU of the at least one candidate base station, configuration information regarding the at least one candidate cell;
generating configuration information of resource for L1 measurement regarding the at least one candidate cell, based on the configuration information regarding the at least one candidate cell; and
transmitting, to a terminal, a second message including the configuration information of the resource for the L1 measurement regarding the at least one candidate cell.

2. The method of claim 1, further comprising:
transmitting, to the CU of the at least one candidate base station, a third message including the configuration information of the resource for the L1 measurement regarding the at least one candidate cell.

3. The method of claim 1, wherein the configuration information regarding the at least one candidate cell includes at least one of configuration information of the at least one candidate cell, an indicator indicating whether the configuration information of the at least one candidate cell is a complete configuration, transmission configuration indication (TCI) state configuration information, channel state information (CSI) resource configuration information, and CSI reporting configuration information.

4. The method of claim 1, wherein the configuration information of the resource for the L1 measurement includes resource configuration information for channel state information (CSI) measurement of the at least one candidate cell.

5. A method performed by a central unit (CU) of a candidate base station in a wireless communication system, the method comprising:
receiving, from a CU of a source base station, a first message for requesting information for LTM configuration regarding at least one candidate base station for inter-CU layer 1/layer 2 (L1/L2) triggered mobility (LTM);
requesting, to at least one distributed unit (DU) of the candidate base station associated with the at least one candidate cell, configuration information regarding the at least one candidate cell;
receiving, from the at least one DU of the candidate base station, the configuration information regarding the at least one candidate cell; and
transmitting, to the CU of the source base station, the configuration information regarding the at least one candidate cell,
wherein configuration information of resource for L1 measurement regarding the at least one candidate cell is generated based on the configuration information regarding the at least one candidate cell.

6. The method of claim 5, further comprising:
receiving, from the CU of the source base station, a second message including the configuration information of the resource for the L1 measurement regarding the at least one candidate cell.

7. The method of claim 5, wherein the configuration information regarding the at least one candidate cell includes at least one of configuration information of the at least one candidate cell, an indicator indicating whether the configuration information of the at least one candidate cell is a complete configuration, transmission configuration indication (TCI) state configuration information, channel state information (CSI) resource configuration information, and CSI reporting configuration information.

8. The method of claim 5, wherein the configuration information of the resource for the L1 measurement includes resource configuration information for channel state information (CSI) measurement of the at least one candidate cell.

9. A central unit (CU) of a source base station in a wireless communication system, the CU of a source base station comprising:
a transceiver; and
a controller connected to the transceiver and configured to:
transmit, to a CU of at least one candidate base station associated with at least one candidate cell for inter-CU layer 1/layer 2 (L1/L2) triggered mobility (LTM), a first message for requesting information for LTM configuration,
receive, from the CU of the at least one candidate base station, configuration information regarding the at least one candidate cell,
generate configuration information of resource for L1 measurement regarding the at least one candidate cell, based on the configuration information regarding the at least one candidate cell, and
transmit, to a terminal, a second message including the configuration information of the resource for the L1 measurement regarding the at least one candidate cell.

10. The CU of a source base station of claim 9, wherein the controller is configured to:
transmit, to the CU of the at least one candidate base station, a third message including the configuration information of the resource for the L1 measurement regarding the at least one candidate cell.

11. The CU of a source base station of claim 9, wherein the configuration information regarding the at least one candidate cell includes at least one of configuration information of the at least one candidate cell, an indicator indicating whether the configuration information of the at least one candidate cell is a complete configuration, transmission configuration indication (TCI) state configuration information, channel state information (CSI) resource configuration information, and CSI reporting configuration information.

12. The CU of a source base station of claim 9, wherein the configuration information of the resource for the L1 measurement includes resource configuration information for channel state information (CSI) measurement of the at least one candidate cell.

13. A central unit (CU) of a candidate base station in a wireless communication system, the CU of a candidate base station comprising:
a transceiver; and
a controller connected to the transceiver and configured to:
receive, from a CU of a source base station, a first message for requesting information for LTM configuration regarding at least one candidate base station for inter-CU layer 1/layer 2 (L1/L2) triggered mobility (LTM) from a CU of a source base station,
request, to at least one distributed unit (DU) of the candidate base station associated with the at least one candidate cell, configuration information regarding the at least one candidate cell,
receive, from the at least one DU of the candidate base station, the configuration information regarding the at least one candidate cell, and
transmit, to the CU of the source base station, the configuration information regarding the at least one candidate cell,
wherein configuration information of resource for L1 measurement regarding the at least one candidate cell is generated based on the configuration information regarding the at least one candidate cell.

14. The CU of a candidate base station of claim 13, wherein the controller is configured to:
Receive, from the CU of the source base station, a second message including the configuration information of the resource for the L1 measurement regarding the at least one candidate cell.

15. The CU of a candidate base station of claim 13, wherein the configuration information regarding the at least one candidate cell includes at least one of configuration information of the at least one candidate cell, an indicator indicating whether the configuration information of the at least one candidate cell is a complete configuration, transmission configuration indication (TCI) state configuration information, channel state information (CSI) resource configuration information, and CSI reporting configuration information, and
wherein the configuration information of resources for the L1 measurement includes resource configuration information for CSI measurement of the at least one candidate cell.
